# EUROPÄISCHE PATENTSCHRIFT

(11) **EP 0 906 367 B1**
(45) Veröffentlichungstag und Bekanntmachung des Hinweises auf die Patenterteilung: **31.07.2002**
(21) Anmeldenummer: 97925222.8
(22) Anmeldetag: 20.06.1997
(51) Int. Cl.: C08L 3/02

(54) **BIOLOGISCH ABBAUBARER WERKSTOFF, BESTEHEND AUS THERMOPLASTISCHER STÄRKE UND POLYESTERAMID.**
BIODEGRADABLE MATERIAL COMPRISING THERMOPLASTIC STARCH AND POLYESTERAMIDE
MATERIAU BIODEGRADABLE COMPRENANT DE L'AMIDON THERMOPLASTIQUE ET UN POLYESTERAMIDE

(30) Priorität: 20.06.1996 DE 19624641
(43) Veröffentlichungstag der Anmeldung: 07.04.1999
(73) Patentinhaber: bio-tec Biologische Naturverpackungen GmbH & Co. KG, 46446 Emmerich (DE)
(72) Erfinder: LOERCKS, Jürgen, D-46459 Rees (DE); POMMERANZ, Winfried, D-32130 Enger (DE); SCHMIDT, Harald, D-46446 Emmerich (DE); TIMMERMANN, Ralf, D-47800 Krefeld (DE); GRIGAT, Ernst, D-51381 Leverkusen (DE); SCHULZ-SCHLITTE, Wolfgang, D-40764 Langenfeld (DE)
(74) Vertreter: Troesch Scheidegger Werner AG
(86) Internationale Anmeldenummer: IB9700749
(87) Internationale Veröffentlichungsnummer: WO9748764

(56) Entgegenhaltungen:
- EP-A- 0 580 032
- EP-A- 0 596 437
- WO-A-90/05161
- WO-A-94/03543

## Beschreibung

Die vorliegende Erfindung betrifft einen biologisch abbaubaren, polymeren Werkstoff, bestehend aus oder auf Basis thermoplastischer Stärke, eine Polymermischung, enthaltend thermoplastische Stärke, ein Verfahren zur Herstellung eines biologisch abbaubaren Werkstoffes, ein Verfahren zur Herstellung einer Polymermischung, sowie Verwendungen des biologisch abbaubaren Werkstoffes sowie der Polymermischungen, enthaltend thermoplastische Stärke.

Biopolymere auf Basis nachwachsender Rohstoffe, die für die Herstellung von biologisch abbaubaren Werkstoffen - BAW geeignet sind, basieren zu einem grossen Teil auf Stärke und umfassen insbesondere thermoplastische Stärke, sowie Polymermischungen aus thermoplastischer Stärke und weiteren abbaubaren Polymerkomponenten wie Polymilchsäure, Polyvinylalkohol, Polycaprolacton, massgeschneiderte Copolyester aus aliphatischen Diolen und aliphatischen wie aromatischen Dicarbonsäuren sowie abbaubare Polyesteramide, die mit thermoplastischer Stärke in der wasserfreien Schmelze duch Esterreaktionen und/oder als Polymer-Kombinationen neue abbaubare Polymerwerkstoffe mit hohem Anteil an nachwachsenden Rohstoffen bilden. Weitere natürliche Additive sind Zuschlagstoffe und Plastifizierungsmittel, wie Glycerin und deren Derivate, sechswertige Zuckeralkohole wie Sorbit und deren Derivate.

In der EP 397 819 wird erstmals ein Verfahren zur Herstellung von TPS definiert, sowie, was unter dem neuen Stärkewerkstoff, genannt thermoplastische Stärke - TPS - zu verstehen ist, und welche gravierenden Unterschiede insbesondere in der Kunststoffverarbeitungstechnologie zur seit längerem bekannten destrukturierten Stärke bestehen.

Die Herstellung der thermoplastischen Stärke erfolgt unter Zuhilfenahme eines Quell- oder Plastifizierungsmittels nicht nur ohne Zugabe von Wasser, sondern vielmehr unter Verwendung von trockener bzw. getrockneter Stärke und/oder Stärke, die durch Entgasung bei der Verarbeitung im Extrusionsprozess während der Schmelzphase getrocknet wird. Stärken enthalten als native Stärken handelsüblich 14 % Wasser, Kartoffelstärke, sogar 18 % natürliche Feuchtigkeit als Ausgleichsfeuchte.

Wenn eine Stärke mit mehr als 5 % Feuchtigkeit unter Druck und Temperatur plastifiziert bzw. verkleistert wird, entsteht immer eine destrukturierte Stärke, wobei der Herstellvorgang der destrukturierten Stärke endotherm ist.

Dagegen ist der Herstellvorgang der thermoplastischen Stärke ein exothermer Vorgang. Dabei wird die im wesentlichen wasserfreie (< 5%) native Stärke in einem Extrusionsprozess mit einem Zuschlagstoff bzw. Plastifiziermittel (z.B. Glycerin, Glycerinacetat, Sorbitol), der die Schmelztemperatur der Stärke erniedrigt, homogenisiert und durch Zuführung von mechanischer Energie und Wärme in einem Temperaturbereich von 120 - 220°C geschmolzen. Die thermoplastische Stärke ist frei von kristallinen Anteilen, zumindest betragen die kristallinen Anteile bei der TPS weniger als 5%, wobei die kristallinen Anteile unverändert sehr niedrig bleiben. Durch die Verfahrensparameter wird eine permanente Umlagerung der Molekularstruktur zu thermoplastischer Stärke erzeugt, die praktisch keine kristallinen Anteile mehr umfasst und im Gegensatz zu destrukturierter Stärke nicht mehr rekristallisiert.

Bei destrukturierter Stärke sind die kristallinen Anteile unmittelbar nach der Herstellung ebenfalls gering, doch nehmen diese bei Lagerung von destrukturierter Stärke wieder zu. Dieses Merkmal zeigt sich auch im Glasumwandlungspunkt, welcher bei thermoplastischer Stärke bei minus 40°C verbleibt, während vergleichsweise er bei destrukturierter Stärke wieder auf über 0°C ansteigt. Aus diesen Gründen wird destrukturierte Stärke und Werkstoffe bzw. Blends auf Basis destrukturierter Stärke bei Lagerung allmählich relativ spröde und die im Polymer enthaltenen Spannungen führen in Abhängigkeit von Zeit und Temperatur zum Kriechen und Verformen des Materials (Memory Effekt).

Differenzeriung: destrukturierte Stärke/thermoplastische Stärke

| Herstellung/ Eigenschaften | destrukturierte Stärken | thermoplastische Stärke |
|---|---|---|
| Wassergehalt | >5 bis 50% | <5%,vorzugsweise wasserfrei in der Schmelzephase |
| Plastifizierungsmittel Zuschlagstoffe | Wasser, Glycerin, Sorbitol, Gemische | Glycerin, Sorbitol, Glycerinacetat, im wesentlichen wasserfrei |
| kristalline Anteile | »5% ansteigend bei Lagerung | «5%, keine kristallinen Anteile, unverändert bei Lagerung |
| Herstellungsprozess | endotherm | exotherm |
| Glasumwandlungspunkt | >0°C | <-40°C |
| Lagereigenschaften | versprödet zunehmend | bleibt flexibel |
| analytische Differenzierung | Röntgendiffraktion der kristallinen Anteile | Röntgendiffraktion der kristallinen Anteile |

Bei der Herstellung der Polymermischungen auf Basis von thermoplastischer Stärke werden Phasenvermittler für die Homogenisierung der hydrophilen und polaren Stärkepolymerphase und der hydrophoben und unpolaren, weiteren Polymerphase verwendet, die entweder zugefügt werden oder vorzugsweise bei der Herstellung der Polymermischung in situ (z.B. durch Umesterung) entstehen.

Als Phasenvermittler werden Blockcopolymere verwendet, die u.a. in der WO 91/16375, EP 0 539 544, US 5 280 055 und EP 0 596 437 ausführlich beschrieben sind. Ebenso sind in diesen Druckschriften Polymermischungen der TPS mit beispielsweise Cellulosederivaten, aliphatischen Polyestern, wie PCL, PHB, PHBV, PLA und PVOH offenbart.

Die intermolekulare Compoundierung dieser unterschiedlichen Polymere erfolgt unter definierten Temperatur- und Scherbedingungen zu verarbeitungsfähigen Granulaten. Diese thermoplastischen Blends werden durch Ankopplung der Phasengrenzflächen zwischen den wenig verträglichen Polymeren technologisch so hergestellt, dass die Verteilungsstruktur der dispersen Phase bei der Verarbeitung durch das optimale Verarbeitungsfenster (Temperatur- und Scherbedingungen) erreicht wird.

Die beispielsweise für die Compoundierung verwendeten Zweischneckenextruder sind vorzugsweise gleichlaufende Doppelschneckenextruder mit dicht ineinandergreifendem Schneckenprofil und besitzen einzeln temperierbare Knetzonen. Für die TPS-Compoundierung bzw. Herstellung von TPS/Polymer-Blends werden Doppelschneckenextruder, vorzugsweise mit acht Kammern bzw. Zonen verwendet, die gegebenenfalls auf zehn Zonen erweitert werden können, und beispielsweise folgenden Aufbau besitzen:
Extruderbauart: Beispielsweise gleichlaufender Zweischneckenextruder
- Schneckenlänge Prozesslänge =: 32-40L/D Schneckendurchmesser D=45 mm
- Schneckendrehzahl =: 230 U/Min
- Durchsatz =: 50-65 kg/h
- Düse, Durchmesser =: 3 mm
- Düse, Anzahl =: 4 Stück

| | | |
|---|---|---|
| Zone 1 | Verdichten mit Entgasen, allmähliches Aufschmelzen des Gemisches (native wie Glycerin) | Einzugszone Temp. 60°C Druck - bar |
| Zone 2 | dito wie Zone 1 | Mischung und Plastifizierung Temp. 140°C Druck > 1 bar Wassergehalt 4 - 7% |
| Zone 3 | dito wie 1 | Plastifizierung Temp. 180°C Druck > 1 bar Wassergehalt 4 - 7% |
| Zone 4 | dito wie 1 | Plastifizierung Temp. 185°C Druck > 1 bar Wassergehalt 4 - 7% |
| Zone 5 | | Entgasung, Wasserentzug Temp. 160°C Druck Vakuum 0,7 bar Wassergehalt < 1% |
| Zone 6 | (Sidefeeder, Dosierung der zusätzlichen Polymere wie beispielsweise PCL) | Dosierung weiterer Polymere Temp. 200 °C Druck > 1 bar Wassergehalt < 1% |
| Zone 7 | Uebergangs-, Kompressions-Reaktionszone | Homogenisierung und ggf. Umesterung Temp. 200 °C Druck > 1 bar Wassergehalt < 1% |
| Zone 8 | Ausstosszone, ggf. Abdampfen von Reaktionswasser | Homogenisierung und ggf. Umesterung Temp. 205 - 210 °C Druck > 1 bar Wassergehalt < 1% |

Ausserhalb der Extrusionsanlage: Abkühlen und Konditionieren der Stränge, gegebenenfalls Aufnahme von 0,3 - 4 % Wasser als Weichmacher im Wasserbad, Stranggranulation und Absackung.

Die oben angeführten Extrusionsbedingungen zur Herstellung von thermoplastischer Stärke bzw. von Mischungen auf Basis thermoplastischer Stärke orientieren sich im wesentlichen am Beispiel einer TPS/PCL-(Polycaprolacton)Polymermischung. Selbstverständlich ändern sich die Verarbeitungs- bzw. Extrusionsbedingungen bei andersartigen Polymermischungen. Anhand des vorab angeführten Beispieles soll lediglich dargelegt werden, wie im Stand der Technik Polymermischungen hergestellt werden, welche auf thermoplastischer Stärke basieren.

Im Rahmen der ursprünglichen deutschen Patentanmeldung DE 19624641.5, in welcher die vorliegende Erfindung im Sinne einer Prioritätsanmeldung dargelegt worden ist, wurden in einer entsprechenden Recherche des Deutschen Patentamtes die nachfolgenden Druckschriften genannt: Kunststoffe 82 (11), S. 1086 - 1089 (1992), WO95/33874, WO94/28029, WO94/03543, EP 580 032, EP 404 727, US 5 453 144, US 5 321 064 und US 5 286 770. Alle genannten Druckschriften beziehen sich, soweit Stärke in denselben ein Thema ist, auf native Stärke oder destrukturierte Stärke, d.h. sie stehen in keinem Zusammenhang mit thermoplastischer Stärke der eingangs definierten Art.

Bei all den im Stand der Technik beschriebenen Polymeren bzw. Polymermischungen, enthaltend thermoplastische Stärke oder basierend auf thermoplastischer Stärke wird davon ausgegangen, dass zunächst die thermoplastische Stärke durch Umwandlung aus nativer Stärke mit einem weitgehendst niedermolekularen Plastifizier- oder Quellmittel bewerkstelligt wird. Anhand des vorab angeführten Beispiels erfolgt die Herstellung der TPS in den Zonen 1 bis 4. Erst anschliessend werden gegebenenfalls weitere Komponenten mit der so hergstellten thermoplastischen Stärke rein physikalisch oder auch teilweise chemisch gemischt, wobei im vorab angeführten Beispiel beim Mischen zwischen dem PCL und der TPS eine Veresterung bzw. eine Umesterungsreaktion stattfindet, womit die Homogenisierung ebenfalls eine chemische Reaktion miteinschliesst. Als Zuschlagstoffe und Plastifiziermittel, die die Schmelztemperatur der Stärke erniedrigen und einen ausreichenden Löslichkeitsparameter besitzen, werden bisher, wie erwähnt, niedrig molekulare Additive, unter anderem wie DMSO, Butandiol, Glycerol, Ethlyenglycol, Propylenglycol, Diglycerid, Diglycolether, Formamid, DMF, Dimethylharnstoff, Dimethylacetamid, N-Methylacetamid, Polyalkenoxid, Glycerinmonooder -diacetat, Sorbitol, Sorbitolester sowie Zitronensäure vorgeschlagen und verwendet.

Auch PVOH, EVOH und deren Derivate sowie Harnstoff und Harnstoffderivate werden gelegentlich verwendet.

Der Löslichkeitsparameter des Plastifiziermittels muss in dem im ursprünglichen Patent EP 397 819 geforderten Bereich liegen, damit die Funktion erfüllt wird. Dies ist das Wesentliche bei der Herstellung der thermoplastischen Stärke, dass das entfernte Wasser durch ein Plastifiziermittel substituiert wird, damit die Zersetzungstemperatur der Stärke beim Umwandeln zu thermoplastischer Stärke bzw. thermoplastisch verarbeitbarer Stärke so weit erniedrigt wird, dass das Mischen in der Schmelze unterhalb der entsprechenden Zersetzungstemperatur der Stärke liegt.

Völlig überraschend wurde nun festgestellt, dass auch Polymere, wie z.B. Polyesteramide, aliphatische Polyester und CoPolyester sowie eine Reihe weiterer nachfolgend definierter Polymere diese Funktion übernehmen können. Damit ergibt sich aber nun der gewichtige Vorteil, dass bei der Herstellung insbesondere von Polymermischungen, basierend auf thermoplastischer Stärke bzw. TPS nicht zunächst die TPS durch Umwandlung aus nativer Stärke mit einem niedermolekularen Plastifiziermittel hergestellt werden muss, bevor das weitere Polymer dazu dosiert wird, sondern, dass direkt quasi in einem Arbeitsgang durch Mischen von nativer Stärke oder Stärkederivaten mit dem zusätzlichen vorzugsweise biologisch abbaubaren hydrophoben Polymer, unter trockenen Bedingungen in der Schmelze die Polymermischung hergestellt werden kann, wobei die darin enthaltene Stärke thermoplastisch verarbeitbar ist. Damit entfällt die Notwendigkeit des zunächst Zumischens eines niedermolekularen Plastifiziermittels, wie beispielsweise Glycerin, wie dies im Stand der Technik notwendigerweise vorgeschlagen wird.

Erfindungsgemäss wird entsprechend ein polymerer Werkstoff, bestehend im wesentlichen aus oder auf Basis thermoplastischer Stärke gemäss dem Wortlaut nach Anspruch 1 vorgeschlagen. Entsprechend enthält die thermoplastische Stärke als Plastifizier- oder Quellmittel, weitgehendst verantwortlich für die Umwandlung der nativen Stärke oder Derivate davon in thermoplastische Stärke mindestens ein Polyesteramide.

Ein grosser Vorteil der Verwendung eines Polyesteramides als Plastifizier- oder Quellmittel zur Herstellung der thermoplastischen Stärke liegt darin, dass in der thermoplastischen Stärke keine flüchtigen und/oder wasserlöslichen und/oder migrierbaren Weichmacher bzw. Plastifiziermittel enthalten sind, was beispielsweise der Fall ist, falls niedermolekulare Plastifizier- oder Quellmittel für die Umwandlung von nativer Stärke oder Derivaten davon zur thermoplastischen Stärke verwendet werden. Auch selbst in dem Falle, wo nach wie vor niedermolekulare Plastifizier- oder Quellmittel verwendet werden, kann deren Anteil auf ein derartig niedriges Niveau reduziert werden, dass die erwähnten Nachteile kaum in Erscheinung treten können.

Besonders Polyesteramide zeigen sehr vorteilhafte Eigenschaftsverbesserungen der Stärke-Polymerwerkstoffe auf, die besonders die hydrophoben Eigenschaften positiv beeinflussen. Durch die intermolekulare Ankoppelung an die Stärke-Polymerphase und die homogene Verteilung der Polymerteilchen wird Einfluss genommen auf die physikalischen Eigenschaften. Insbesondere die hydrophoben Eigenschaften der Stärke-Kunststoffe werden erheblich gesteigert. Die Feuchte-Resistenz wird gesteigert und die Versprödungstendenzen der Stärke-Kunststoffe deutlich abgesenkt. Daneben eignen sich zusätzlich zu einem Polyesteramid aber auch aliphatische Polyester und Polyesterurethane für die Umwandlung der nativen Stärke in thermoplastische Stärke, wobei gleichzeitig die genannten Polymere als Mischkomponenten zur thermoplastischen Stärke für die Herstellung von biologisch abbaubaren Polymermischungen verwendet werden können.

Für das Mischen mit nativer Stärke und Stärkederivaten bzw. daraus hergestellter thermoplastischer Stärke kommen insbesondere die nachfolgenden Polymere in Frage:
Aliphatische und teilaromatische Polyester aus
   A) linearen bifunktionellen Alkoholen, wie beispielsweise Ethylenglycol, Hexadiol oder bevorzugt Butandiol und/oder gegebenenfalls cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopenthylglycol sowie aus linearen bifunktionellen Säuren, wie beispielsweise Bernsteinsäure oder Adipinsäure und/oder gegebenenfalls cycloaliphatischen bifunktionellen Säuren, wie beispielsweise Cyclohexandicarbonsäure und/oder gegebenenfalls aromatischen bifunktionellen Säuren, wie beispielsweise Terephthalsäure oder Isophthalsäure oder Naphthalindicarbonsäure und zusätzlich gegebenenfalls geringen Mengen höherfunktionellen Säuren, wie beispielsweise Trimellitsäure oder
   B) aus säure- und alkoholfunktionalisierten Bausteinen, beispielsweise Hydroxybuttersäure oder Hydroxyvaleriansäure oder deren Derivaten, beispielsweise ε-Caprolacton,
   oder einer Mischung oder einem Copolymer aus A und B,
   wobei die aromatischen Säuren nicht mehr als 50 Gew.% Anteil, bezogen auf alle Säuren, ausmachen.
   Die Säuren können auch in Form von Derivaten, wie beispielsweise Säurechloride oder Ester eingesetzt werden;
Aliphatische Polyesterurethane aus
   C) einem Esteranteil aus linearen bifunktionellen Alkoholen, wie beispielsweise Ethylenglycol, Butandiol, Hexandiol, bevorzugt Butandiol, und/oder gegebenenfalls cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopentylglycol sowie aus linearen bifunktionellen Säuren, wie beispielsweise Bernsteinsäure oder Adiphinsäure und/oder gegebenenfalls cycloaliphatischen und/oder aromatischen bifunktionellen Säuren, wie beispielsweise Cyclohexandicarbonsäure und Terephthalsäure und zusätzlich gegebenenfalls geringen Mengen höherfunktionellen Säuren, wie beispielsweise Trimellitsäure oder
   D) aus einem Esteranteil aus säure- und alkoholfunktionalisierten Bausteinen, beispielsweise Hydroxybuttersäure und Hydroxyvaleriansäure, oder deren Derivaten, beispielsweise ε-Caprolacton,
      oder einer Mischung oder einem Copolymer aus C) und D), und
   E) aus dem Reaktionsprodukt von C) und/oder D) mit aliphatischen und/oder cycloaliphatischen bifunktionellen und zusätzlich gegebenenfalls höherfunktionellen Isocyanaten, z.B. Tetramethylendiisocyanat, Hexamethylendiisocyanat, Isophorondiisocyanat, gegebenenfalls zusätzlich mit linearen und/oder cycloaliphatischen bifunktionellen und/oder höherfunktionellen Alkoholen, z.B. Ethylenglycol, Butandiol, Hexandiol, Neopentylglycol, Cyclohexandimethanol,
   wobei der Esteranteil C) und/oder D) mindestens 75 Gew.%, bezogen auf die Summe aus C), D) und E) beträgt.
Aliphatisch-aromatische Polyestercarbonate aus
   F) einem Esteranteil aus linearen bifunktionellen Alkohlen, wie beispielsweise Ethylenglykol, Butandiol, Hexandiol, bevorzugt Butandiol, und/oder cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopentylglycol sowie aus linearen bifunktionellen Säuren, wie beispielsweise Bernsteinsäure oder Adipinsäure und/oder gegebenenfalls cycloaliphatischen bifunktionellen Säuren, wie beispielsweise Cyclohexandicarbonsäure und zusätzlich gegebenenfalls geringen Mengen höherfunktionellen Säuren, wie beispielsweise Trimellitsäure oder
   G) aus einem Esteranteil aus säure- und alkoholfunktionalisierten Bausteinen, beispielsweise Hydroxybuttersäure oder Hydroxyvaleriansäure oder deren Derivaten, beispielsweise ε-Caprolacton,
      oder einer Mischung oder einem Copolymer aus F) und G) und
   H) einem Carbonatanteil, der aus aromatischen bifunktionellen Phenolen, bevorzugt Bisphenol-A und Carbonatspendern, beispielsweise Phosgen, hergestellt wird,
   wobei der Esteranteil F) und/oder G) mindestens 70 Gew.%, bezogen auf die Summe aus F), G) und H) beträgt;
Aliphatische Polyesteramide aus
   I) einem Esteranteil aus linearen und/oder cycloaliphatischen bifunktionellen Alkoholen, wie beispielsweise Ethylenglycol, Hexandiol, Butandiol, bevorzugt Butandiol, Cyclohexandimethanol, und zusätzlich gegebenenfalls geringen Mengen höherfunktionellen Alkoholen, z.B. 1,2,3-Propantriol oder Neopentylglycol, sowie aus linearen und/oder cycloaliphatischen bifunktionellen Säuren, z.B. Bernsteinsäure, Adipinsäuren, Cyclohexandicarbonsäure,
      bevorzugt Adipinsäure und zusätzlich gegebenenfalls geringen Mengen höherfunktioneller Säuren, z.B. Trimellitsäure, oder
   K) aus einem Esteranteil aus säure- und alkoholfunktionalisierten Bausteinen, beispielsweise Hydroxybuttersäure, oder Hydroxyvaleriansäure, oder deren Derivaten, beispielsweise ε-Caprolacton,
      oder einer Mischung oder einem Copolymer aus I) und K), und
   L) einem Amidanteil aus linearen und/oder cycloaliphatischen bifunktionellen und zusätzlich gegebenenfalls geringen Mengen höherfunktionellen Aminen, z.B. Tetramethylendiamin, Hexamethylendiamin, Isophorondiamin, sowie aus linearen und/oder cycloaliphatischen bifunktionellen und zusätzlich gegebenenfalls geringen Mengen höherfunktionellen Säuren, z.B. Bernsteinsäure oder Adipinsäure, oder
   M) aus einem Amidanteil aus säure- und aminfunktionalisierten Bausteinen, bevorzugt Laurinlactam und besonders bevorzugt ε-Caprolactam,
   oder einer Mischung aus L) und M) als Amidanteil, wobei
   der Esteranteil I) und/oder K) mindestens 30 Gew.%, bezogen auf die Summe aus I), K), L) und M) beträgt.

Im Zusammenhang mit Polyesteramiden sei insbesondere auf die EP-A 0 641 817 verwiesen, welche sich auf die Herstellung und Verwendung von thermoplastisch verarbeitbaren und biologisch abbaubaren aliphatischen Polyesteramiden bezieht. In dieser europäischen Patentanmeldung werden für die erfindungsgemässe Synthese von Polyesteramiden, insbesondere Monomeren aus den folgenden Gruppen vorgeschlagen:

Dialkohole wie Ethylenglycol, 1,4-Butandiol, 1,3-Propandiol, 1,6-Hexandiol, Diethylenglycol u.a. und/oder Dicarbonsäure wie Oxalsäure, Bernsteinsäure, Adipinsäure u.a. auch in Form ihrer jeweiligen Ester (Methyl-, Ethyl- usw.)
und/oder Hydroxycarbonsäuren und Lactone, wie Caprolacton u.a.
und/oder Aminoalkohole, wie Ethanolamin, Propanolamin usw. und/oder cyclische Lactame wie ε-Caprolactam oder Laurinlactam usw.
und/oder w-Aminocarbonsäuren wie Aminocapronsäure usw. und/oder Mischungen (1:1 Salze) aus Dicarbonsäuren wie Adipinsäure, Bernsteinsäure usw. und Diaminen, wie Hexamethylendiamin, Diaminobutan usw.

Ebenso können sowohl hydroxyl- oder säureterminierte Polyester mit Molekulargewichten zwischen 200 und 10 000 als esterbildende Komponente eingesetzt werden.

Auf die Herstellbedingungen der vorab beschriebenen Polymeren bzw. Polymermischungen kann verzichtet werden, da deren Herstellung aus dem Stand der Technik bestens bekannt ist, wie beispielsweise Polyesteramide aus der genannten EP-0 641 817.

Als weiteres hydrophobes Polymer sind aliphatische Polyester, wie Polycaprolacton, Polymilchsäure, Polyhydroxybuttersäure, Polyhydroxybenzoesäure, Polyhydroxybuttersäure/Hydroxyvaleriansäure-Copolymere sowie Mischungen davon zu erwähnen.

Zum Mischen mit TPS eignen sich auch statistische Copolyester aus aliphatischen und aromatischen Dicarbonsäuren, mit einem Anteil, beispielsweise von ca. 35 - 55 Mol.% mit an aromatischer Säure, wie beispielsweise Terephtalsäure, wobei sich beispielsweise Polyalcylenterethalate und Polyethylenterephthalate als geeignete Copolyester zum Mischen mit TPS herausgestellt haben.

Einerseits können die oben erwähnten hydrophoben biologisch abbaubaren Polymere zusätzlich zu einem Polyesteramid für das Umwandlen der nativen Stärke oder Stärkederivaten in thermoplastische Stärke verwendet werden und weiter um mit der so hergestellten thermoplastischen Stärke gemischt zu werden, um einen biologisch abbaubaren Werkstoff auf Basis TPS zu erzeugen.

Das Zusetzen weiterer Additive, wie Weichmacher, Stabilisatoren, Antiflammittel sowie weiterer, biologisch abbaubarer Polymere, wie Celluloseester, Celluloseacetat, Cellulose, Polyhydroxibuttersäure, hydrophobe Proteine, Polyvinylalkohol, etc., ist möglich und richtet sich erneut nach den Anforderungen an die herzustellende Polymermischung sowie selbstverständlich auch nach der Verfügbarkeit der entsprechenden Komponenten. Als Additive kommen auch die nachfolgend angeführten Polymere in Frage, wie Gelatine, Proteine, Zeine, Polysaccaride, Cellulosederivate, Polylactide, Polyvinylalkohol, Polyvinylacetat, Polyacrylate, Zuckeralkohole, Schellack, Casein, Fettsäurederivate, Pflanzenfasern, Lecithin, Chitosan, Polyesterpolyurethane sowie Polyesteramide. Zu erwähnen sind auch Polyesterblends, bestehend aus thermoplastischer Stärke, dem erfindugnsgemäss vorgeschlagenen, aliphatisch/-aromatischen Polyester sowie als weitere Komponente, Copolymere, ausgewählt aus Aethylen-Acrylsäure-Copolymer und Aethylen-Vinylalkohol-Copolymer.

Als Füllstoffe eignen sich insbesondere auch organische Füllstoffe, erhalten aus nachwachsenden Rohstoffen, wie beispielsweise Cellulosefasern. Zum Verstärken von Werkstoffen auf Basis TPS bzw. TPS-Blends eignen sich besonders Fasern pflanzlichen Ursprungs, wie Baumwolle, Jute, Flachs, Sisal, Hanf und Ramie.

Für die Herstellung der erfindungsgemäss vorgeschlagenen thermoplastischen Stärke bzw. von biologisch abbaubaren Werkstoffen auf Basis von thermoplastischer Stärke ist es wesentlich, dass beim Mischen der natiyen Stärke mit dem erfindungsgemäss vorgeschlagenen Polyesteramid als hydrophobes biologisch abbaubares Polymer beim Aufschmelzen der Wassergehalt der nativen Stärke auf unter 1 Gew.% reduziert wird. Dies ist notwendig, damit beim Mischen des als Plastifiziermittel oder Quellmittel verwendeten Polymers unter Ausschluss von Wasser die in Molekülketten des hydrophoben Polymers eingebauten Estergruppen Veresterungsreaktionen mit der nativen Stärke eingehen, womit die so reagierenden Molekülketten mit der Stärke einen Phasenvermittler bilden, der eine molekulare Kopplung der beiden Phasen, d.h. der hydrophilen Stärkephase mit der hydrophoben Polymerphase ermöglichen, um so eine kontinuierliche Phase zu bilden. Im Falle von Feuchtigkeit wird diese Reaktion konkurrenziert, indem die Säureestergruppen bei Anwesenheit von Wasser nicht mit der Stärke zur Bildung des Phasenvermittlers reagieren, sondern hydrolisieren. Damit aber wird die Bildung eines Phasenvermittlers verhindert, womit ein einwandfreies Dispergieren bzw. Homogenisieren verunmöglicht wird. Falls ein Durchmischen des als Plastifizieroder Quellmittels verwendeten hydrophoben biologisch abbaubaren Polymers mit der nativen Stärke verunmöglicht wird, kann auch die für die Herstellung der thermoplastischen Stärke notwendige Umwandlung der nativen Stärke nicht stattfinden, wodurch entweder die Stärke destrukturiert wird, oder aber bei zu niedrigem Wassergehalt ein molekularer Abbau der Stärke einsetzt. Wesentlich beim Umwandlen der nativen Stärke in thermoplastische Stärke ist ja, wie eingangs erwähnt, dass der Schmelzpunkt der nativen Stärke soweit beim Mischen mit dem Plastifiziermittel reduziert wird, dass eine molekulare Zersetzung der Stärke verhindert wird. Andererseits aber muss die Schmelze getrocknet werden, um die Bildung von destrukturierter Stärke zu verhindern. Aus diesem Grunde ist die Phasendurchmischung der Stärkenphase mit der hydrophoben Polymerphase notwendig, wie oben geschildert.

Durch das Mischen von nativer, Stärke oder Derivaten davon mit dem Polyesteramid als hydrophobes Polymer in der Schmelze, weitgehendst unter Ausschluss von Wasser, ergibt sich durch die in situ-Reaktion der Stärke mit dem hydrophoben Polymeren wie erwähnt der sogenannte Phasenvermittler, welcher für sich allein gesehen aber auch als sogenannte hydrophobe thermoplastische Stärke bezeichnet werden kann. Diese hydrophobe thermoplastische Stärke weist im Vergleich zur aus dem Stand der Technik bekannten thermoplastischen Stärke, hergestellt unter Verwendung von niedermolekularen Plastifizier- oder Quellmittel, wie Glycerin oder Sorbitol, eine wesentlich höhere Wasserbeständigkeit auf, respektive die Wasseraufnahme ist wesentlich geringer. Diese so hergestellte hydrophobe thermoplastische Stärke kann als Ausgang dienen für weitere massgeschneiderte Polymere durch Zusetzen weiterer biologisch abbaubarer, hydrophober Polymere.

Nebst der vorzugsweise verwendeten nativen Stärke sind auch Stärkederivate, wie Stärkeester, Stärkeether, säuremodifizierte Stärke als Rohstoff zur Herstellung der thermoplastisch-reaktiven Stärke geeignet, wobei oxidierte Stärken mit erhöhtem Gehalt an Carboxylgruppen besonders reaktionsfähig sind.

Je nach verwendetem, Polyesteramid als hydrophobes biologisch abbaubares Polymer kann die Verarbeitungs- bzw. Schmelztemperatur beim Mischen und beim Herstellen der thermoplastischen Stärke bzw. dem biologisch abbaubaren Werkstoff zwischen ca. 120 und 260°C vorzugsweise 140 - 210°C liegen. Damit eine einwandfreie Umwandlung von nativer Stärke in TPS bzw. hydrophobe TPS ermöglicht wird, ist es notwendig, der nativen Stärke je nach verwendetem hydrophoben Polymer einen Anteil von 10 - 40 Gew.%, bezogen auf die Mischung, beizufügen, wobei nebst dem Anteil am Quell- oder Plastifiziermittel selbstverständlich weitere Mengen des verwendeten, hydrophoben Polymers beigemengt werden können. Der angegebene Bereich zwischen 10 - ca. 40 Gew.% bezieht sich lediglich auf die für die Umwandlung notwendige Menge.

Weiter hat es sich gezeigt, dass es sogar vorteilhaft sein kann, beim Mischen der nativen Stärke mit dem hydrophoben biologisch abbaubaren Polymeren als Plastifiziermittel die Feuchtigkeit auf deutlich unter 1 Gew.% zu reduzieren, d.h. auf einen Wert unter 0,5 Gew.% bzw. gar unter 0,1 Gew.%, bezogen auf das Gesamtgewicht der Mischung. Durch das hinzugefügte Plastifiziermittel ist sichergestellt, dass der Schmelzpunkt der Stärke derart reduziert wird, dass beim Erzeugen der Schmelze zur Herstellung der homogenen Mischung diese nicht molekular abgebaut wird. Selbstverständlich wäre es an sich nach wie vor möglich, beim Herstellen der thermoplastischen Stärke bzw. des biologisch abbaubaren Polymerwerkstoffes zusätzlich Glycerin, Sorbitol oder ein anderes Plastifiziermittel zuzusetzen, doch hätte dies gegebenenfalls Auswirkungen auf die physikalischen bzw. mechanischen Eigenschaften des herzustellenden Werkstoffes, welche Eigenschaften in der Regel verbessert werden können, wenn auf das Zusetzen grösserer Mengen niedermolekularer Plastifiziermittel verzichtet werden kann.

Beispiele von möglichen und bevorzugten Polymermischungen bzw. biologisch abbaubaren Werkstoffen, mindestens aufweisend Stärke bzw. thermoplastische Stärke und ein hydrophobes biologisch abbaubares Polymer, wie beansprucht in den Ansprüchen sind in den nachfolgend dargestellten Tabellen 1 bis 4 aufgeführt. Ergänzt werden diese Beispiele durch eine Legende, in welcher sämtliche Abkürzungen und gegebenenfalls in den Beispielen verwendete Materialien erläutert bzw. erklärt werden.

Die insgesamt 20 angegebenen Beispiele schliessen dabei sowohl Komponenten ein, welche für die Herstellung der thermoplastischen Stärke bzw. hydrophoben thermoplastischen Stärke im Sinne von Plastifiziermittel bzw. Quellmittel verwendet worden sind, wie auch zusätzliche polymere Mischpartner zur thermoplastischen Stärke für die Herstellung von erfindungsgemäss vorgeschlagenen biologisch abbaubaren Polymermischungen, bei welchen Mischpartnern es sich ebenfalls um hydrophobe biologisch abbaubare Polymere handelt. Zudem enthalten die Tabellen die Verarbeitungsbedingungen und insbesondere den während der Herstellung der Polymermischung herrschende Wassergehalt im Extruder, welcher durchwegs < 0,1 Gew.% beträgt. Weiter sind in den Tabellen bevorzugte Anwendungsmöglichkeiten der beispielsweise hergestellten biologisch abbaubaren Polymerwerkstoffe angeführt. Selbstverständlich enthalten die Tabellen nur Beispiele und alle eingangs erwähnten Komponenten sind geeignet für das Mischen mit Stärke bzw. thermoplastischer Stärke zur Herstellung von erfindungsgemäss definierten biologisch abbaubaren Werkstoffen bzw. Polymermischungen für technische wie auch nichttechnische Anwendungen.

**Tabelle / Table 1**

| Beispiele/Examples | | | | | |
|---|---|---|---|---|---|
| Example | 1 | 2 | 3 | 4 | 5 |
| ¹Starch % | 28,7 | 28,7 | 28,7 | 28,7 | 33,3 |
| ^{1a} TIR 2900 % | 16,3 | 16,3 | 16,3 | 16,7 | - |
| ^{1b} TIR 2901 % | - | - | - | - | 18,9 |
| 1e TIR 2907A | - | - | - | - | - |
| 1f TIR 2908 | - | - | - | - | - |
| ²TPS % | 45 | 45 | 45,0 | 45,0 | 52,2 |
| H₂O % | <0,1 | <0,1 | <0,1 | <0,1 | <0,1 |
| ³PLA % | - | - | - | 55 | - |
| ⁴Polyamid1 | - | 55 | - | - | - |
| ⁵Polyester 1 | - | - | 55 | | - |
| ⁶PCL % | 55 | - | - | | 47.8 |
| H₂O % | <0,1 | < 0,1 | <0,1 | < 0,1 | < 0,1 |
| ⁷Extrusion | ZSK 40 | ZSK 40 | ZSK 40 | ZSK 40 | ZSK 40 |
| T°C | 150 | 170 | 200 | 195 | 155 |
| Pressure bar | 6,1 | 8,5 | 11 | 6,5 | 5 |
| MFI g/10' | 10 | 13 | 9,5 | 8,5 | 11 |
| Granulat | 4 mm | 4 mm | 4 mm | 4 mm | 4 mm |
| Gm H₂O % | 0,3 | 0,2 | 0,4 | 0,1 | 0,2 |
| Anwendung | | | | | |
| Blasfolie | + | + | + | + | + |
| Flachfolie | + | + | + | + | + |
| Platten | + | + | + | + | + |
| Spritzguß | + | + | - | + | + |
| Fasem | - | - | - | - | - |

**Tabelle / Table 2**

| Beispiele/Examples | | | | | | | |
|---|---|---|---|---|---|---|---|
| Example | 6 | 7 | 8 | 9 | 10 | 11 | 12 |
| ¹Starch % | 33,3 | 33,3 | 52,5 | 33,3 | 33,3 | 33,3 | 33,3 |
| ^{1a} TIR 2900 % | - | - | 23,5 | 18,9 | 18,7 | 18,7 | 18,7 |
| ^{1b} TIR 2901 % | - | - | - | - | - | - | - |
| 1e TIR 2907A 1f TIR 2908 | 18,9 - | 18,9 | - | - | - | - | - |
| ²TPS % | 52,2 | 52,2 | 76,0 | 52,2 | 52,2 | 52,2 | 52,2 |
| H₂O % | < 0,1 | < 0,1 | < 0,1 | < 0,1 | < 0,1 | < 0,1 | < 0,1 |
| ³PLA % | - | - | - | - | - | 47,8 | - |
| ⁴Polyamid1 | - | - | - | 47,8 | - | - | - |
| ⁵Polvester | 1 | - - | - | - | 47,8 | - | 20,0 |
| ⁶PCL % | 47,8 | 47,8 | 24,0 | - | - | - | 27,8 |
| H₂O % | <0,1 | <0,1 | <0,1 | <0,1 | <0,1 | <0,1 | <0,1 |
| ⁷Extrusion | ZSK 40 | ZSK 40 | ZSK 40 | ZSK 40 | ZSK 40 | ZSK 40 | ZSK 40 |
| T°C | 170 | 170 | 150 | 165 | 210 | 210 | 205 |
| Pressure bar | 5,5 | 3,5 | 8,5 | 4,0 | 6,5 | 8,0 | 8,5 |
| MFI g/10' | 9,5 | 2,5 | 9,5 | 11,5 | 9,5 | 8,5 | 8,0 |
| Granulat | 4 mm | 4 mm | 4 mm | 4 mm | 4 mm | 4 mm | 4 mm |
| Gra H₂O % | 0,3 | 0,2 | 0,2 | 0,1 | 0,2 | 0,2 | 0,3 |
| Anwendung | | | | | | | |
| Blasfolie | + | + | + | + | + | + | + |
| Flachfolie | + | - | + | + | + | + | + |
| Platten | + | - | + | + | + | + | + |
| Spritzguß | - | - | - | + | - | - | - |
| Fasern | - | + | - | - | - | - | - |

**Tabelle / Table 3**

| Beispiele/Examples | | | | | | | |
|---|---|---|---|---|---|---|---|
| Example | 13 | 14 | 15 | 16 | 17 | 18 | 19 |
| ¹Starch % | 20,0 | 20,0 | 47,3 | 33,3 | 47,3 | 33,3 | 51,0 |
| ^{1a} TIR 2900 % | 11,4 | 11,4 | 21,1 | 18,9 | 21,1 | 18,7 | 21,2 |
| ²TPS % | 31,4 | 31,4 | 68,4 | 52,2 | 68,4 | 52,2 | 71,2 |
| H₂O % | < 0.1 | <0.1 | <0.1 | <0.1 | <0.1 | <0.1 | <0.1 |
| PLA | | | | | 32,6 | | |
| ¹⁰CAc % | 68,6 | 63,6 | 32,6 | 21,0 | - | 21,0 | - |
| ⁴Polvamid1 | - | - | | 26,8 | - | - | - |
| ⁵Polvester 1 | - | - | | - | - | 26,8 | 10,0 |
| ⁶PCL % | - | 5,0 | | - | - | - | 14,8 |
| H₂O % | <0,1 | <0,1 | <0,1 | <0,1 | <0,1 | <0,1 | <0,1 |
| ⁷Extrusion | ZSK 40 | ZSK 40 | ZSK 40 | ZSK 40 | ZSK 40 | ZSK 40 | ZSK 40 |
| T°C | 210 | 210 | 195 | 195 | 185 | 195 | 205 |
| Pressure bar | 9 | 8 | 6,5 | 6 | 7 | 6,5 | 8,5 |
| MFI g/10' | 8,5 | 9,5 | 9,5 | 10 | 8,5 | 9 | 8,0 |
| Granulat | 4 mm | 4 mm | 4 mm | 4 mm | 4 mm | 4 mm | 4 mm |
| Gra H₂O % | 0,1 | 0,2 | 0,2 | 0,1 | 0,2 | 0,2 | 0,3 |
| Anwendung | | | | | | | |
| Blasfolie | - | - | - | - | - | - | + |
| Flachfolie | + | + | + | + | + | + | + |
| Platten | + | + | + | + | + | + | + |
| Spritzguß | + | + | + | + | + | + | - |
| Fasern | - | - | - | - | - | - | - |

**Tabelle / Table 4**

| Example | 20 |
|---|---|
| ¹Starch % | 2,0 |
| ^{1a} TIR 2900 % | 1,4 |
| ²TPS % | 3,4 |
| H₂O % | < 0,1 |
| PLA | - |
| ¹⁰CAc % | - |
| ⁴Polyamid1 | - |
| ⁵Polyester 1 | 59,0 |
| ⁶PCL % | 35,6 |
| H₂O % | < 0,1 |
| ⁷Extrusion | ZSK 40 |
| T°C | 170 |
| Pressure bar | 6 |
| MFI g/10' | 10 |
| Granulalt | 4 mm |
| Gra H₂O % | 0,1 |
| Anwendung | |
| Blasfolie | + |
| Flachfolie | + |
| Platten | - |
| Spritzguß | - |
| Fasern | - |

| | |
|---|---|
| Legende: ¹Starch = nativ potatoe starch dried 3,5% H20: Plasticizer 1a - 1f Bayer Polymere gemäss nachfolgender Liste. | |
| ²TPS = thermoplastic starch = starch + plasticizer < 0,1 % H20, - Wasseranteil durch Entgasung, analog EP 0 397 819 ³PLA (Polylactic acid resin) = Mitsui Toatsu Chemicals LACEA H 100 MFR 13 190°C 2,16 kg; | |
| ⁴Polyamid 1 = Bayer BAK 1095 Polyesteramid MFI 2,5 150°C 2,16kg; | |
| ⁵Polyester 1 = BASF ZK 242/108 Copolyester aus aliphatischen Diolen und aliphatischen/aromatischen Dicarbonsäuren MVR 3,0 bei 190°C/2,16 kg; | |
| ⁶PCL (Polycaprolacton ) = Union Carbide Tone Polymer P-787 - wird verwendet als weiteres hydrophobes Polymer in Kombination mit einem erfindungsgemäss vorgeschlagenen hydrophoben Polymer, verantwortlich für die Herstellung der TPS; MFI 1,0 125°C 44 psi g/10min; | |
| ⁷Extrusion Equipment = Werner & Pfleiderer ZSK 40; MFI 150°C, 10 kg | |
| 10 CAc Cellulosediacetat DS 2,5 | |

Bei den mit TIR 2900 - TIR 2901-TIR 2907-A und TIR 2908 bezeichneten Materialien handelt es sich um Polyesteramid-Produkte der Firma Bayer, welche nachfolgend charakterisiert sind:

TIR 2900 ist ein Polyesteramid mit 48,5 Gew.% Esteranteil aus Adipinsäure und 1,4-Butandiol sowie 41,2 Gew.% Amidanteil aus Polycaprolactam sowie 10,3 Gew.% Stearinsäure, bezogen auf den gesamten Ansatz. Das Produkt hat eine relative Lösungsviskosität von 1,29, gemessen 0,5 %-ig in m-Kresol.

TIR 2901 ist ein Polyesteramid mit 29,8 Gew.% Esteranteil aus Adipinsäure und 1,4-Butandiol sowie 56,1 Amidanteil aus Polycaprolactam sowie 14,1 Gew.% Stearinsäure, bezogen auf den gesamten Ansatz. Das Produkt hat eine relative Lösungsviskosität von 1,25, gemessen 0,5 %-ig in m-Kresol.

TIR 2907-A ist ein Polyesteramid mit 32,3 Gew.% Esteranteil aus Adipinsäure und Glycerin sowie 54,1 Gew.% Aminanteil aus Polycaprolactam sowie 13,6 Gew.% Stearinsäure, bezogen auf den gesamten Ansatz. Das Produkt hat eine relative Lösungsviskosität von 2,00, gemessen 0,5 %ig in m-Kresol.

TIR 2908 ist ein Polyesteramid mit 42,0 Gew.% Esteranteil aus Adipinsäure und 1,4 Butandiol sowie 58,0 Gew.% Aminanteil aus Polycaprolactam, bezogen auf den gesamten Ansatz. Das Produkt wurde 15%-ig in Caprolactam bei 90°C gelöst, anschliessend auf ein Blech gegossen, mit Trockeneis gekühlt und zerkleinert. Das Material wurde 4x ca. 20%ig in Aceton bis zum Rückfluss erhitzt. Die Lösung wurde unter starkem Rühren in einen Eimer gefüllt und mit nochmal ca. der gleichen Menge Aceton verdünnt, die Ausfällung abgesaugt und bei 30 - 40°C im Vakuumtrockenschrank getrocknet. Das Produkt hat eine relative Lösungsviskosität von 2,12, gemessen 0,5%-ig in m-Kresol.

Mittels erfindungsgemäss vorgeschlagenen Polymermischungen hergestellte Spritzgussteile, Extrudate und Folien weisen nebst relativ guten Materialeigenschaften eine hervorragende biologische Abbaubarkeit auf, weshalb sie einen gewichtigen Beitrag zu leisten vermögen an die akute Abfallproblematik. So sind beispielsweise Folien hergestellt aus einer erfindungsgemäss vorgeschlagenen Polymermischung ausgezeichnet geeignet für verschiedenste Anwendungen im Landwirtschaftsbereich, beispielsweise zum Abdecken von Feldern, können doch derartige Folien nach deren Verwendung entweder kompostiert werden, oder aber am Felde in das Erdreich umgepflügt werden. Auch für die Herstellung von Kompostiersäcken, Kompostierabfallbehältnissen, usw., eignen sich derartige Polymermischungen. Weiter lassen sich mittels Formblasen aus der erfindungsgemäss vorgeschlagenen Polymermischung beispielsweise Behälter und Flaschen herstellen.

Durch die Auswahl der Polymerkomponenten kann auf die Abbaugeschwindigkeit Einfluss genommen werden.

Die erfindungsgemässen Polymermischungen eignen sich aber auch für die Herstellung von textilen Erzeugnissen, wie beispielsweise für das Erzeugen von Fasern, Monofilen, Flächengebilden, wei Gewebe, Filze, Vliese, sogenannte Backsheets, Textilverbundstoffe, Flocken, Watten, wie auch linienförmige Gebilde, wie beispielsweise Fäden, Garne, Seile, Leinen etc. Insbesondere hat es sich in der Praxis gezeigt, dass die erfindungsgemässen Polymermischungen geeignet sind für die Herstellung von Hygieneartikeln, wie Windeln, Binden, Inkontinenzprodukte sowie Betteinlagen. Diese Hygieneartikel weisen in ihrem Aufbau unter anderem Vliesen auf, hergestellt aus dem erfindungsgemässen Polymerwerkstoff, da dieser eine sehr gute Hautverträglichkeit aufweist, atmungsaktiv ist, wasserdampf- durchlässig ist bei gleichzeitiger Wasserdichtheit, und dabei aber vollständig biologisch abbaubar ist.

Die erfindungsgemässen Fasern sind ebenfalls zur Herstellung von Filtermaterialien geeignet, wie insbesondere Zigarettenfilter.

Ein Grossteil der erfindungsgemäss vorgeschlagenen Polymermischungen, wie insbesondere enthaltend thermoplastische Stärke und mindestens ein Polyesteramid sowie einen Copolyester bzw. und/oder ein Polyesteramid und/oder ein Polyesterurethan eignen sich zudem als Klebstoff oder aber können verwendet werden als Beschichtungen, wie beispielsweise für die Imprägnierung von textilen Geweben. Dabei hat es sich gezeigt, dass die für diese Anwendungsbereiche geeigneten, erfindungsgemäss vorgeschlagenen Polymermischungen vorzugsweise wenigstens teilweise in alkoholischen Lösungsmitteln gelöst vorgelegt und appliziert werden. So wurde beispielsweise im Zusammenhang mit einigen Versuchsbeispielen überraschend festgestellt, dass die so hergestellten Polymermischungen in heissem Alkohol-Aethanolgemisch löslich sind. Auch in diesem Falle ergab sich eine mögliche Verwendung im Sinne eines biologisch abbaubaren Klebstoffes, als Beschichtung bzw. Imprägnierung, welche hydrophobe Eigenschaften bewirkt und wasserdampfdurchlässig ist.

Als Lösemittel haben sich allerdings nebst Alkoholen auch Ketone, Aether, halogenierte oder halogenfreie Kohlenwasserstoffe oder Ester als geeignet erwiesen, wobei bevorzugt Aceton, Essigsäure-Ethylester, Isopropanol, Methanol, Dichlormethan, Chloroform, Tetrahydrofuran, Ethanol oder Tuluol verwendet werden. Die Konzentration der Lösungen liegen erfindungsgemäss zwischen 70 Gew.% und 1 Gew.% Polymeranteil, bevorzugt zwischen 50 Gew.% und 8 Gew.% Polymeranteil, besonders bevorzugt zwischen 40 Gew.% und 19 Gew.% Polymeranteil.

Auf diese Art und Weise lassen sich somit Lösungen kompostierbarer Klebstoffe herstellen, die zum Verkleben verwendet werden können, beispielsweise mittels einer geeigneten Verklebevorrichtung, bevorzugt bei Temperaturen in der Grössenordnung zwischen ca. 60 - 100°C. Durch Anlegen beispielsweise von Vakuum zum beschleunigten Entfernen des Lösemittels oder durch Zugabe von Kristallisationsbeschleunigern kann der Klebevorgang beschleunigt werden. Mittels der erfindungsgemässen Klebstoffe können u.a. Leder, Keramik, Holz, Pappe, Papier oder Kunststoffe verklebt werden.

Wiederum eine weitere Anwendung der erfindungsgemäss definierten thermoplastischen Stärke bzw. der Polymermischungen, basierend auf thermoplastischer Stärke, stellt die Herstellung flexibler Verpackungen dar, bestehend aus Papier und einer Folie aus dem erfindungsgemässen Werkstoff, indem das Papier mit der Folie durch Kalandrieren bei erhöhter Temperatur kaschiert wird. Dieser Verbund aus Papier und Biokunststoffolie ist leicht bedruckbar, biologisch abbaubar und zur Herstellung von flexiblen Verpackungen im Food- und Non Food-Sektor geeignet.

Hochwertige Tapeten, sogenannte Vinyltapeten, werden durch Beschichten mit einem PVC-Plastisol im Siebdruck- oder Tiefdruckverfahren hergestellt. Die Emissions- und Umweltprobleme von Produkten, die PVC enthalten, sind hinlänglich bekannt. Aus den erfindungsgemässen Polymermischungen können Blasoder Flachfolien hergestellt werden in einer für die Tapetenbeschichtung üblichen Schichtdicke von 80 - 120 µm, welche Beschichtungen ggf. Füllstoffe und weitere Additive enthalten können, die mit dem Tapetenpapier durch Heissiegeln in einem Kalanderwerkzeug verbunden werden und dann wie bekannt mehrfach bedruckt werden.

Durch wesentlich verbesserte Werkstoff-Eigenschaften der erfindungsgemässen Polymermischungen, insbesondere in bezug auf hohe Dimensionsstabilität, auch unter wechselnden Klimabedingungen, ergeben sich Anwendungen, welche in der Vergangenheit anderen hochwertigen Werkstoffen vorbehalten blieben. Dies insbesondere deshalb, da diese neu entwickelten, erfindungsgemässen Werkstoffe biologisch abbaubar sind, wenn das Milieu und die Umweltbedingungen entsprechende Voraussetzungen anbieten. So ergibt sich als weitere Anwendung die Herstellung von Manöver- und Übungsmunition im Wehrbereich, welche in der Vergangenheit aus Kunststoffen hergestellt wurden, welche nach dem Gebrauch entsprechende Umweltverschmutzungen auslösen, da sie bekanntlich nicht oder nur ungenügend eingesammelt werden können. Es ist daher vorteilhaft, wenn diese Manöver- und Übungsmunition aus den erfindungsgemässen, biologisch abbaubaren Werkstoffen hergestellt werden kann.

Wiederum aus dem Wehrbereich sind sogenannte Überfahrhilfen und Faltstrassen bekannt, welche nebst den militärischen aber auch in zivilen Bereichen vielfältig eingesetzt werden, um unwegsame Bereiche befahrbar zu machen. Faltstrassen werden üblicherweise aus Metallwerkstoffen, selten aus Kunststoff hergestellt. Theoretisch sollten Faltstrassen nach der Übung oder dem Einsatz wieder aufgenommen werden, praktisch wird dies aber nicht durchgeführt, weil die Faltstrassen nach der Belastung durch Schwerverkehr, insbesondere durch schwere Lastwagen und Panzerfahrzeuge verzogen sind und damit für einen weiteren Einsatz unbrauchbar. Um auch in diesem Fall die Umweltbelastung zu reduzieren, werden Faltstrassen vorteilhafterweise aus den vorgeschlagenen, hochfesten, biologisch abbaubaren Werkstoffen hergestellt.

Ferner können mittels erfindungsgemäss vorgeschlagener Polymerlösungen nicht wasserfeste, kompostierbare Gegenstände wasserfest ausgerüstet werden, indem diese Gegenstände bei Temperaturen oberhalb 60°C bevorzugt oberhalb 70°C beschichtet werden. Die nicht wasserfesten kompostierbaren Gegenstände können sein: Celluloseprodukte, wie beispielsweise Papier oder Pappe, textile Gebilde, wie beispielsweise Stoffe oder Vliese, Holz oder Holzwerkstoffe, stärkehaltige Materialien, wie beispielsweise Stärkeschaum mit oder ohne biologisch abbaubaren Polymeren als Blendpartner, Folien oder Formteile aus biologisch abbaubaren Werkstoffen, Leder oder Lederwerkstoffe, Chitin bzw. Produkte daraus. Die erfindungsgemässen Ueberzüge sind auch zur Papierbeschichtung geeignet. Ebenfalls Verwendung finden können die erfindungsgemässen Ueberzüge zur Korrosioninhibierung von Metallen. Ferner können Einweggeschirr, Aufbewahrungsbehälter oder Särge mit wasserfesten Ueberzügen versehen werden. Die Schichtdicke des Ueberzugs beträgt im allgemeinen 0,1 - 20, vorzugsweise 0,5 - 10, insbesondere 1 - 5 mm.

Selbstverständlich eignen sich die erfindungsgemässen polymeren Werkstoffe auf Basis thermoplastisch verarbeitbarer Stärke aber auch für x-beliebige andere Anwendungen, wie beispielsweise auch für Spritzgusseinwegprodukte, etc.

## Patentansprüche

1. Polymerer Werkstoff, bestehend aus oder auf Basis thermoplastischer Stärke, **dadurch gekennzeichnet, dass** die thermoplastische Stärke als Plastifizier- oder Quellmittel, verantwortlich für die Umwandlung von nativer Stärke oder Stärkederivaten in thermoplastische Stärke, mindestens.
- ein Polyesteramid, enthält,
wobei die thermoplastische Stärke erhältlich ist durch mindestens teilweise In-situ-Reaktion der Stärke oder Stärkederivate mit dem Polyesteramid durch Mischen in der Schmelze bei einem Wassergehalt von < 1 Gew%.

2. Polymerer Werkstoff nach Anspruch 1, **dadurch gekennzeichnet, dass** die thermoplastische Stärke mindestens ein Polyesteramid enthält, in der Grössenordnung von 10 - 40 Gew.%, vorzugsweise 20 - 36 Gew.%, bezogen auf die Mischung Stärkeanteil/Plastifizieroder Quellmittel.

3. Polymerer Werkstoff nach einem der Ansprüche 1 oder 2, **dadurch gekennzeichnet, dass** er nebst thermoplastischer Stärke und dem Plastifizier- oder Quellmittel mindestens ein weiteres hydrophobes biologisch abbaubares Polymer aus der nachfolgenden Liste enthält:
- ein aliphatischer Polyester,
- ein Copolyester mit aliphatischen und aromatischen Blöcken,
- ein Polyesteramid,
- ein Polyesterurethan,
- ein Polyethylenoxidpolymer bzw. ein Polyglycol
- und/oder Mischungen davon.

4. Polymerer Werkstoff nach einem der Ansprüche 2 oder 3, **dadurch gekennzeichnet, dass** das weitere Polymer identisch ist mit dem Plastifizier- oder Quellmittel.

5. Polymerer Werkstoff nach einem der Ansprüche 2 bis 4 **dadurch gekennzeichnet, dass** als das Polyesteramid und/oder als mindestens ein weiteres hydrophobes biologisch abbaubares Polymer ein Polymer aus der nachfolgenden Aufzählung eingesetzt wird:
Aliphatische und teilaromatische Polyester aus
A) linearen bifunktionellen Alkoholen, wie beispielsweise Ethylenglycol, Hexadiol oder bevorzugt Butandiol und/oder gegebenenfalls cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopentylglycol sowie aus linearen bifunktionellen Säuren, wie beispielsweise Bernsteinsäure oder Adipinsäure und/oder gegebenenfalls cycloaliphatischen bifunktionellen Säuren, wie beispielsweise Cyclohexandicarbonsäure und/oder gegebenenfalls aromatischen bifunktionellen Säuren, wie beispielsweise Terephthalsäure oder Isophthalsäure oder Naphthalindicarbonsäure und zusätzlich gegebenenfalls geringen Mengen höherfunktionellen Säuren, wie beispielsweise Trimellitsäure oder
B) aus säure- und alkoholfunktionalisierten Bausteinen, beispielsweise Hydroxybuttersäure oder Hydroxyvaleriansäure oder deren Derivaten, beispielsweise ε-Caprolacton,
oder einer Mischung oder einem Copolymer aus A und B,
wobei die aromatischen Säuren nicht mehr als 50 Gew.% Anteil, bezogen auf alle Säuren, ausmachen;
Aliphatische Polyesterurethane aus
C) einem Esteranteil aus linearen bifunktionellen Alkoholen, wie beispielsweise Ethylenglycol, Butandiol, Hexandiol, bevorzugt Butandiol, und/oder gegebenenfalls cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopentylglycol sowie aus linearen bifunktionellen Säuren, wie beispielsweise Bernsteinsäure oder Adiphinsäure und/oder gegebenenfalls cycloaliphatischen und/oder aromatischen bifunktionellen Säuren, wie beispielsweise Cyclohexandicarbonsäure und Terephthalsäure und zusätzlich gegebenenfalls geringen Mengen höherfunktionellen Säuren, wie beispielsweise Trimellitsäure oder
D) aus einem Esteranteil aus säure- und alkoholfunktionalisierten Bausteinen, beispielsweise Hydroxybuttersäure und Hydroxyvaleriansäure, oder deren Derivaten, beispielsweise ε-Caprolacton,
oder einer Mischung oder einem Copolymer aus C) und D), und
E) aus dem Reaktionsprodukt von C) und/oder D) mit aliphatischen und/oder cycloaliphatischen bifunktionellen und zusätzlich gegebenenfalls höherfunktionellen Isocyanaten, z.B. Tetramethylendiisocyanat, Hexamethylendiisocyanat, Isophorondiisocyanat, gegebenenfalls zusätzlich mit linearen und/oder cycloaliphatischen bifunktionellen und/oder höherfunktionellen Alkoholen, z.B. Ethylenglycol, Butandiol, Hexandiol, Neopentylglycol, Cyclohexandimethanol,
wobei der Esteranteil C) und/oder D) mindestens 75 Gew.%, bezogen auf die Summe aus C, D) und E) beträgt;
Aliphatisch-aromatische Polyestercarbonate aus
F) einem Esteranteil aus linearen bifunktionellen Alkohlen, wie beispielsweise Ethylenglykol, Butandiol, Hexandiol, bevorzugt Butandiol, und/oder cycloaliphatischen bifunktionellen Alkoholen, wie beispielsweise Cyclohexandimethanol und zusätzlich gegebenenfalls geringen Mengen höherfunktionellen Alkoholen, wie beispielsweise 1,2,3-Propantriol oder Neopentylglycol sowie aus linearen bifunktionellen Säuren, wie beispielsweise Bernsteinsäure oder Adipinsäure und/oder gegebenenfalls cycloaliphatischen bifunktionellen Säuren, wie beispielsweise Cyclohexandicarbonsäure und zusätzlich gegebenenfalls geringen Mengen höherfunktionellen Säuren wie beispielsweise Trimellitsäure oder
G) aus einem Esteranteil aus säure- und alkoholfunktionalisierten Bausteinen, beispielsweise Hydroxybuttersäure oder Hydroxyvaleriansäure oder deren Derivaten, beispielsweise ε-Caprolacton.
oder einer Mischung oder einem Copolymer aus F) und G) und
H) einem Carbonatanteil, der aus aromatischen bifunktionellen Phenolen, bevorzugt Bisphenol-A und Carbonatspendern, beispielsweise Phosgen, hergestellt wird,
wobei der Esteranteil F) und/oder G) mindestens 70 Gew.%, bezogen auf die Summe aus F), G) und H) beträgt;
Aliphatische Polyesteramide aus
I) einem Esteranteil aus linearen und/oder cycloaliphatischen bifunktionellen Alkoholen, wie beispielsweise Ethylenglycol, Hexandiol, Butandiol, bevorzugt Butandiol, Cyclohexandimethanol, und zusätzlich gegebenenfalls geringen Mengen höherfunktionellen Alkoholen, z.B. 1,2,3-Propantriol oder Neopentylglycol, sowie aus linearen und/oder cycloaliphatischen bifunktionellen Säuren, z.B. Bernsteinsäure, Adipinsäure, Cyclohexandicarbonsäure, bevorzugt Adipinsäure und zusätzlich gegebenenfalls geringen Mengen höherfunktioneller Säuren, z.B. Trimellitsäure, oder
K) aus einem Esteranteil aus säure- und alkoholfunktionalisierten Bausteinen, beispielsweise Hydroxybuttersäure, oder Hydroxyvaleriansäure, oder deren Derivaten, beispielsweise ε-Caprolacton,
oder einer Mischung oder einem Copolymer aus I) und K), und
L) einem Amidanteil aus linearen und/oder cycloaliphatischen bifunktionellen und zusätzlich gegebenenfalls geringen Mengen höherfunktionellen Aminen, z.B. Tetramethylendiamin, Hexamethylendiamin, Isophorondiamin, sowie aus linearen und/oder cycloaliphatischen bifunktionellen und zusätzlich gegebenenfalls geringen Mengen höherfunktionellen Säuren, z.B. Bernsteinsäure oder Adipinsäure, oder
M) aus einem Amidanteil aus säure- und aminfunktionalisierten Bausteinen, bevorzugt Laurinlactam und besonders bevorzugt ε-Caprolactam,
oder einer Mischung aus L) und M) als Amidanteil, wobei
der Esteranteil I) und/oder K) mindestens 30 Gew.%, bezogen auf die Summe aus I), K), L) und M) beträgt.

6. Polymerer Werkstoff nach einem der Ansprüche 2 bis 4, **dadurch gekennzeichnet, dass** als weiteres hydrophobes biologisch abbaubares Polymer ein Polyester-Copolymer eingesetzt wird, erhältlich durch Polykondensation von einerseits mindestens einem Diol aus der Reihe 1,2-Ethandiol, 1,3-Propandiol, 1,4-Butandiol und/oder 1,6-Hexandiol mit andererseits mindestens einer aromatischen Di-Carbonsäure und gegebenenfalls mindestens einer aliphatischen Di-Carbonsäure.

7. Polymerer Werkstoff nach Anspruch 6, **dadurch gekennzeichnet, dass** als Di-Carbonsäure Terephtalsäure verwendet wird und als aliphatische Di-Carbonsäure Adipinsäure und/oder Sebacinsäure.

8. Polymerer Werkstoff nach einem der Ansprüche 2 bis 7, **dadurch gekennzeichnet, dass** als weiteres hydrophobes biologisch abbaubares Polymer Polymilchsäure, Polyhydroxybuttersäure, Polyhydroxybenzoesäure, Polyhydroxybuttersäure-Hydroxyvaleriansäure-Copolymer oder Polycaprolacton.

9. Polymerer Werkstoff nach einem der Ansprüche 2 bis 8, **dadurch gekennzeichnet, dass** als weiteres hydrophobes biologisch abbaubares Polymer mindestens ein Polymer der nachfolgenden Liste verwendet wird:
- oligomere Polyesteramide mit einem Molgewicht ab 300, vorzugsweise ab 1000, sowie polymere Polyesteramide ab 1000 mol/Gew., vorzugsweise über 10 000, erhältlich durch Synthese aus den nachfolgenden Monomeren:
Dialkohole wie Ethylenglykol, 1,4-Butandiol, 1,3-Propandiol, 1,6-Hexandiol, Diethylenglykol u.a. und/oder Dicarbonsäure wie Oxalsäure, Bernsteinsäure, Adipinsäure u.a. auch in Form ihrer jeweiligen Ester (Methyl-, Ethyl- usw.)
und/oder Hydroxycarbonsäuren und Lactone wie Caprolacton u.a. und/oder Aminoalkohole wie Ethanolamin, Propanolamin usw.
und/oder cyclische Lactame wie ε-Caprolactam oder Laurinlactam usw.
und/oder w-Aminocarbonsäuren wie Aminocapronsäure usw. und/oder Mischungen (1:1 Salze) aus Dicarbonsäuren wie Adipinsäure, Bernsteinsäure usw. und Diaminen wie Hexamethylendiamin, Diaminobutan usw.

10. Polymerer Werkstoff nach einem der Ansprüche 1 bis 9, **dadurch gekennzeichnet, dass** mindestens eine weitere Komponente, wie ein Additiv, Zuschlagstoff oder Füllstoff miteingeschlossen ist, wie ein Weichmacher, ein Stabilisator, ein Antiflammittel, ein weiteres biologisch abbaubares Biopolymer, wie Celluloseester, Cellulose, Polyhydroxybuttersäure, ein hydrophobes Protein, Polyvinylalkohol, Gelatine, Zein, Polysaccarid, Polylactid, Polyvinylacetat, Poly- acrylat, ein Zuckeralkohol, Schellack, Casein, ein Fettsäurederivat, Pflanzenfasern, Lecithin oder Chitosan.

11. Polymerer Werkstoff nach einem der Ansprüche 1 bis 10, **dadurch gekennzeichnet, dass** er zusätzlich Glyzerin, Sorbitol oder ein anderes Plastifiziermittel enthält, welches beim Herstellen der thermoplastischen Stärke bzw. des biologisch abbaubaren Polymerwerkstoffes zugesetzt wird.

12. Verfahren zur Herstellung eines polymeren Werkstoffes, bestehend aus oder auf Basis thermoplastischer Stärke, **dadurch gekennzeichnet, dass** Stärke, wie insbesondere native Stärke oder Derivate davon in der Schmelze mit einem Plastifizier- oder Quellmittel homogenisiert wird, wobei der Wassergehalt vor oder beim Mischen auf < 1 Gew.%, bezogen auf das Gewicht der Mischung reduziert wird, und wobei als Plastifizier- oder Quellmittel mindestens ein Polyesteramid, verwendet wird.

13. Verfahren nach Anspruch 12 zur Herstellung eines polymeren Werkstoffes, bestehend aus oder auf Basis thermoplastischer Stärke, **dadurch gekennzeichnet, dass** Stärke, wie insbesondere native Stärke oder Derivate davon, in der Schmelze mit einem weiteren hydrophoben, biologisch abbaubaren Polymeren, wie insbesondere einem Blockpolymeren gemischt wird, wobei das hydrophobe Polymer mit der Stärke oder dem Derivat davon in situ reagiert, welches Reaktionsprodukt gegebenenfalls bei Hinzufügen zusätzlichen biologisch abbaubaren Polymers oder eines weiteren hydrophobisch biologisch abbauren Polymeres als Phasenvermittler zur Bildung einer homogenen Polymerschmelze dient.

14. Verfahren nach einem der Ansprüche 12 oder 13, **dadurch gekennzeichnet, dass** der Wassergehalt vor oder beim Mischen auf < 0,5 Gew.%, vorzugsweise < 0,1 Gew.% reduziert wird.

15. Verfahren nach einem der Ansprüche 12 bis 14, **dadurch gekennzeichnet, dass** das Mischen der Schmelze in einem Temperaturbereich von ca. 120 - 260°C erfolgt, vorzugsweise in einem Bereich von ca. 140 - 210°C.

16. Verfahren nach einem der Ansprüche 12 bis 15, **dadurch gekennzeichnet, dass** das Mischen in einem Extruder oder Kneter erfolgt, und dass nach Abzug der Schmelze aus der Düse diese in einem Wasserbad gekühlt und konditioniert wird, um anschliessend beispielsweise granuliert zu werden.

17. Verfahren zum Herstellen von Blasfolien aus einem polymeren Werkstoff nach einem der Ansprüche 1 bis 11, **dadurch gekennzeichnet, dass** der als Granulat vorliegende polymere Werkstoff vor dem Verarbeiten durch Blasen mit einem Weichmacher, wie Glyzerin, Sorbitol, etc. und/oder Wasser konditioniert wird.

18. Verfahren nach Anspruch 17, **dadurch gekennzeichnet, dass** der als Granulat vorliegende polymere Werkstoff zu einem Wassergehalt von 1 - 6 Gew.% konditioniert wird, und anschliessend zu Folien geblasen wird, wobei die hergestellte Folie vorzugsweise noch unmittelbar nach Herstellen in relativ feuchter Umgebung gelagert wird, mit einer relativen Feuchte > 40 %.

19. Verfahren zum Verarbeiten eines polymeren Werkstoffes nach einem der Ansprüche 1 bis 11, **dadurch gekennzeichnet, dass** zum Spritzen oder Extrudieren des als Granulat vorliegenden Werkstoffes der Wassergehalt auf max. 1,0 Gew.%, vorzugsweise 0,4 Gew.% reduziert wird.

20. Ein- oder Mehrschichtfolie, mindestens enthaltend eine Schicht, bestehend aus einem polymeren Werkstoff nach einem der Ansprüche 1 bis 11.

21. Flexible Verpackungsfolie, enthaltend mindestens eine durch Kalandrieren bei erhöhter Temperatur erhältliche kaschierte Verbundfolie, mindestens enthaltend Papier und eine Schicht aus einem polymeren Werkstoff nach einem der Ansprüche 1 bis 11.

22. Behältnis oder Flasche, hergestellt mittels Formblasen, bestehend im wesentlichen aus einem polymeren Werkstoff nach einem der Ansprüche 1 bis 11.

23. Textiles Erzeugnis, wie Fasern, Monofile, Garne, Seile, Leinen, Flocken, Watten, Gewebe, Filze, Vliese, bestehend im wesentlichen aus einem polymeren Werkstoff nach einem der Ansprüche 1 bis 11.

24. Filtermaterial, bestehend im wesentlichen aus einem polymeren Werkstoff nach einem der Ansprüche 1 bis 11 oder einem textilen Erzeugnis nach Anspruch 23, wobei das Filtermaterial als Zigarettenfilter vorliegt.

25. Hygieneartikel, wie Windeln, Binden, Inkontinenzprodukte, Betteinlagen und dgl., aufweisend mindestens ein Vlies und/oder ein Backsheet, im wesentlichen bestehend aus einem polymeren Werkstoff nach einem der Ansprüche 1 bis 11.

26. Klebstoff, im wesentlichen bestehend aus einem polymeren Werkstoff nach einem der Ansprüche 1 bis 11 oder einer alkoholischen Lösung davon.

27. Beschichtung, wie insbesondere ein Imprägnierungsmittel, im wesentlichen bestehend aus einem polymeren Werkstoff nach einem der Ansprüche 1 bis 11 oder einer alkoholischen Lösung davon.

28. Manöver- oder Übungsmunition, im wesentlichen bestehend aus einem polymeren Werkstoff nach einem der Ansprüche 1 bis 11.

29. Überfahrhilfen oder Faltstrassen sowohl im militärischen wie auch im zivilen Bereich für das Befahrbarmachen von unwegsamen Bereichen, im wesentlichen bestehend aus einem polymeren Werkstoff nach einem der Ansprüche 1 bis 11.

30. Verfahren zum Herstellen ein- und mehrschichtiger Flachoder Blasfolien, von denen mindestens eine Schicht aus einer Polymermischung nach einem der Ansprüche 1 bis 11 besteht, insbesondere hergestellt gemäss einem Verfahren nach einem der Ansprüche 13 bis 17, wobei die Plastifizierung des Rohstoffs und die anschliessende Folienherstellung kontinuierlich und einstufig erfolgt.

## Claims

1. Polymer material consisting of or on the basis of thermoplastic starch, **characterised in that** the thermoplastic starch contains a polyester amide as plasticiser or swelling agent responsible for the conversion of crystal starch or starch derivatives into thermoplastic starch, wherein the thermoplastic starch is obtained by at least partial in situ reaction of the starch or starch derivative with the polyester amide by mixing in the melt with a water content of less than 1 weight percent.

2. Polymer material according to claim 1, **characterised in that** the thermoplastic starch contains at least one polyester amide in the order of magnitude of 10 to 40 weight percent, preferably 20 to 36 weight percent, referred to the mixture of starch component and plasticiser or swelling agent.

3. Polymer material according to one of claims 1 and 2, **characterised in that** apart from thermoplastic starch and the plasticiser or swelling agent it contains at least one further hydrophobic, biologically degradable polymer from the following list:
- an aliphatic polyester,
- a copolyester with aliphatic and aromatic blocks,
- a polyester amide
- a polyester urethane,
- a polyethylene oxide polymer or a polyglycol
- and/or mixtures thereof.

4. Polymer material according to one of claims 2 and 3, **characterised in that** the further polymer is identical with the plasticiser or swelling agent.

5. Polymer material according to one of claims 2 to 4, **characterised in that** a polymer from the following list is used as the polyester amide and/or as at least one further hydrophobic, biologically degradable polymer:
aliphatic and partly aromatic polyester consisting of
A) linear bifunctional alcohols, for example ethylene glycol, hexanediol or, preferably, butanediol, and/or optionally cycloaliphatic bifunctional alcohols, for example cyclohexane dimethanol, and optionally also small quantities of higher-functional alcohols, for example 1,2,3-propanetriol or neopentyl glycol, as well as of linear bifunctional acids, for example succinic acid or adipic acid, and/or optionally cycloaliphatic bifunctional acids, for example cyclohexane dicarboxylic acid, and/or optionally aromatic bifunctional acids, for example terephthalic acid or isophthalic acid or naphthalene dicarboxylic acid, and optionally also small quantities of higher-functional acids, for example trimellitic acid, or
B) acid-functionalised and alcohol-functionalised elements, for example hydroxy butyric acid or hydroxy valeric acid or derivatives thereof, for example ε-caprolactone,
or a mixture or a copolymer of A) and B),
wherein the aromatic acids make up not more than a 50 weight percent proportion referred to all acids;
aliphatic polyester urethane consisting of:
C) an ester component of linear bifunctional alcohols, for example ethylene glycol, butanediol, hexanediol, preferably butanediol, and/or optionally cycloaliphatic bifunctional alcohols, for example cyclohexane dimethanol, and optionally also small quantities of higher-functional alcohols, for example 1,2,3-propanetriol or neopentyl glycol, as well as of linear bifunctional acids, for example succinic acid or adipic acid, and/or optionally cycloaliphatic and/or aromatic bifunctional acids, for example cyclohexane dicarboxylic acid and terephthalic acid, and optionally also small quantities of higher-functional acids, for example trimellitic acid, or
D) an ester component of acid-functionalised and alcohol-functionalised elements, for example hydroxy butyric acid and hydroxy valeric acid or derivatives thereof, for example ε-caprolactone,
or a mixture or a copolymer of C) and D), and
E) the reaction product of C) and/or D) with aliphatic and/or cycloaliphatic bifunctional and optionally also higher-functional isocyanates, for example tetramethylene diisocyanate, hexamethylene diisocyanate, isophorone diisocyanate, optionally also with linear and/or cycloaliphatic bifunctional and/or higher-functional alcohols, for example ethylene glycol, butanediol, hexanediol, neopentyl glycol, cyclohexane dimethanol,
wherein the ester component C) and/or D) amounts to at least 75 weight percent referred to the sum of C), D), and E);
aliphatic/aromatic polyester carbonate consisting of
F) an ester component of linear bifunctional alcohols, for example ethylene glycol, butanediol, hexanediol, preferably butanediol, and/or cycloaliphatic bifunctional alcohols, for example cyclohexane dimethanol, and optionally also small quantities of higher-functional alcohols, for example 1,2,3-propanetriol or neopentyl glycol, as well as of linear bifunctional acids, for example succinic acid or adipic acid, and/or optionally cycloaliphatic bifunctional acids, for example cyclohexane dicarboxylic acid, and optionally also small quantities of higher-functional acids, for example trimellitic acid, or
G) an ester component of acid-functionalised and alcohol-functionalised elements, for example hydroxy butyric acid or hydroxy valeric acid or derivatives thereof, for example ε-caprolactone,
or a mixture or a copolymer of F) and G), and
H) a carbonate component which is produced from aromatic bifunctional phenols, preferably bisphenol-A and carbonate donors, for example phosgene,
wherein the ester component F) and/or G) amounts to at least 70 weight percent referred to the sum of F), G), and H);
aliphatic polyester amide consisting of
I) an ester component of linear and/or cycloaliphatic bifunctional alcohols, for example ethylene glycol, hexanediol, butanediol, preferably butanediol, cyclohexane dimethanol, and optionally also small quantities of higher-functional alcohols, for example 1,2,3-propanetriol or neopentyl glycol, as well as of linear and/or cycloaliphatic bifunctional acids, for example succinic acid, adipic acid, cyclohexane dicarboxylic acid, preferably adipic acid, and optionally also small quantities of higher-functional acids, for example trimellitic acid, or
K) an ester component of acid-functionalised and alcohol-functionalised elements, for example hydroxy butyric acid or hydroxy valeric acid or derivatives thereof, for example ε-caprolactone,
or a mixture or a copolymer of I) and K), and
L) an amide component of linear and/or cycloaliphatic bifunctional and optionally also small quantities of higher-functional amines, for example tetramethylene diamine, hexamethylene diamine, isophorone diamine, as well as linear and/or cycloaliphatic bifunctional and optionally also small quantities of higher-functional acids, for example succinic acid or adipic acid, or
M) an amide component of acid-functionalised and amine-functionalised elements, preferably laurinlactam and particularly preferably ε-caprolactam,
or a mixture of L) and M) as amide component, wherein
the ester component I) and/or K) amounts to at least 30 weight percent referred to the sum of I), K), L) and M).

6. Polymer material according to one of claims 2 to 4, **characterised in that** a polyester copolymer is used as further hydrophobic, biologically degradable polymer, the copolymer being obtained by polycondensation of, on the one hand, at least one diol from the series 1,2-ethanediol, 1,3-propanediol, 1,4-butanediol and/or 1,6-hexanediol with, on the other hand, at least one aromatic dicarboxylic acid and optionally at least one aliphatic dicarboxylic acid.

7. Polymer material according to claim 6, **characterised in that** terephthalic acid is used as dicarboxylic acid, and adipic acid and/or sebacic acid is or are used as aliphatic dicarboxylic acid.

8. Polymer material according to one of claims 2 to 7, **characterised in that** polylactic acid, polyhydroxy butyric acid, polyhydroxy benzoic acid, polyhydroxy-butyric-acid/hydroxy-valeric-acid copolymer or polycaprolactone is used as further hydrophobic, biologically degradable polymer.

9. Polymer material according to one of claims 2 to 8, **characterised in that** at least one polymer from the following list is used as further hydrophobic, biologically degradable polymer:
- oligomeric polyester amide with a mol/weight from 300, preferably from 1,000, as well as polymer polyester amide from 1,000 mol/weight, preferably above 10,000, obtained by synthesis from the following monomers:
dialcohols, such as ethylene glycol, 1,4,-butanediol, 1,3-propanediol, 1,6-hexanediol, diethylene glycol amongst others, and/or dicarboxylic acid, such as oxalic acid, succinic acid, adipic acid amongst others, also in the form of the respective esters thereof (methyl-, ethyl-, etc.), and/or hydroxycarboxylic acids and lactones, such as caprolactone amongst others, and/or amino alcohols, such as ethanol amine, propanol amine, etc., and/or cyclic lactams, such as ε-caprolactam or laurinlactam, etc., and/or w-amino carboxylic acids, such as amino caproic acid, etc., and/or mixtures (1:1 salts) of dicarboxylic acids, such as adipic acid, succinic acid, etc., and diamines, such as hexamethylene diamine, diaminobutane, etc.

10. Polymer material according to one of claims 1 to 9, **characterised in that** at least one further component such as an additive, a loading substance or a filler is included therewith, such as a softener, a stabiliser, a flame-retarder, a further biologically degradable biopolymer, such as cellulose ester, cellulose, polyhydroxy butyric acid, a hydrophobic protein, polyvinylalcohol, gelatine, zein, polysaccaride, polylactide, polyvinylacetate, polyacrylate, a sugar alcohol, shellac, casein, a fatty acid derivative, plant fibres, lecithin or chitosan.

11. Polymer material according to one of claims 1 to 10, **characterised in that** it contains additional glycerol, sorbitol or another plasticiser, which is added during manufacture of the thermoplastic starch or of the biologically degradable polymer material.

12. Method of producing a polymer material consisting of or on the basis of thermoplastic starch, **characterised in that** starch, such as in particular crystal starch or derivative thereof, is homogenised in the melt with a plasticiser or swelling agent, wherein the water content before or during mixing is reduced to less than 1 weight percent referred to the weight of the mixture and wherein at least one polyester amide is used as plasticiser or swelling agent.

13. Method according to claim 12 for producing a polymer material consisting of or on the basis of thermoplastic starch, **characterised in that** starch, such as in particular crystal starch or derivative thereof, is mixed in the melt with a further hydrophobic biologically degradable polymer, such as in particular block polymers, wherein the hydrophobic polymer is reacted in situ with the starch or the derivative thereof, which reaction product optionally with addition of an additional biologically degradable polymer or a further hydrophobic, biologically degradable polymer serves as a phase mediator for formation of a homogeneous polymer melt.

14. Method according to one of claims 12 and 13, **characterised in that** the water content is reduced before or during mixing to less than 0.5 weight percent, preferably less than 0.1 weight percent.

15. Method according to one of claims 12 to 14, **characterised in that** the mixing of the melt is carried out in a temperature range of approximately 120 to 260° C, preferably in a range of approximately 140 to 210° C.

16. Method according to one of claims 12 to 15, **characterised in that** the mixing is carried out in an extruder or a kneader and that after discharge of the melt from the nozzle the melt is cooled and conditioned in a water bath so as to be, for example, subsequently granulated.

17. Method of producing blown films from a polymer material according to one of claims 1 to 11, **characterised in that** the polymer material present as granulate is conditioned by a softener, such as glycerol, sorbitol, etc., and/or by water before processing by blowing.

18. Method according to claim 17, **characterised in that** the polymer material present as granulate is conditioned to a water content of 1 to 6 weight percent and subsequently blown into films, wherein the produced film is preferably stored in a relatively moist atmosphere, with a relative humidity greater than 40%, directly after production.

19. Method of processing a polymer material according to one of claims 1 to 11, **characterised in that** for injection-moulding or extruding the material present as granulate the water content is reduced to at most 1:0 weight percent, preferably 0.4 weight percent.

20. Single-layer or multi-layer film at least containing a layer consisting of a polymer material according to one of claims 1 to 11.

21. Flexible packing film containing at least one composite film which is obtained by calendering at elevated temperature and which at least contains paper and a layer of a polymer material according to one of claims 1 to 11.

22. Container or bottle produced by blow-moulding, substantially consisting of a polymer material according to one of claims 1 to 11.

23. Textile product, such as fibres, monofilaments, yarns, ropes, cords, flocks, wadding, fabrics, felts, fleeces, substantially consisting of a polymer material according to one of claims 1 to 11.

24. Filter material substantially consisting of a polymer material according to one of claims 1 to 11 or a textile product according to claim 23, wherein the filter material is present as a cigarette filter.

25. Sanitary article, such as diapers, bandages, incontinence products, bed inlays and the like, comprising at least one fleece and/or a backing sheet, substantially consisting of a polymer material according to one of claims 1 to 11.

26. Adhesive material substantially consisting of a polymer material according to one of claims 1 to 11 or an alcoholic solution thereof.

27. Coating, such as in particular an impregnating agent, substantially consisting of a polymer material according to one of claims 1 to 11 or an alcoholic solution thereof.

28. Manoeuvre or practice munition substantially consisting of a polymer material according to one of claims 1 to 11.

29. Travel-surfacing aids or folding roads for rendering rough regions passable in both the military field and the civil field, substantially consisting of a polymer material according to one of claims 1 to 11.

30. Method of producing single-layer and multi-layer flat films or blown films, of which at least one layer consists of a polymer mixture according to one of claims 1 to 11, in particular produced in accordance with a method according to one of claims 13 to 17, wherein the plasticisation of the raw material and the subsequent production of the film are carried out continuously and in one step.

## Revendications

1. Matériau polymère consistant en ou à base d'amidon thermoplastique,
**caractérisé en ce que**
l'amidon thermoplastique contient au moins un polyesteramide comme agent plastifiant ou comme agent gonflant responsable de la transformation de l'amidon naturel ou des dérivés d'amidon en amidon thermoplastique, dans lequel l'amidon thermoplastique est accessible par au moins partiellement une réaction « in situ » de l'amidon ou des dérivés d'amidon avec le polyester amide, par mélange à l'état fondu pour une teneur en eau de < 1 % en poids.

2. Matériau polymère selon la revendication 1,
**caractérisé en ce que**
l'amidon thermoplastique contient au moins un polyesteramide dans l'ordre de grandeur de 10 à 40 % en poids, de préférence de 20 à 36 % en poids rapporté au mélange, quantité d'amidon/agent plastifiant ou agent gonflant.

3. Matériau polymère selon l'une des revendications 1 ou 2,
**caractérisé en ce qu'**
il contient outre l'amidon thermoplastique et l'agent plastifiant ou gonflant, au moins un autre polymère hydrophobe biologiquement dégradable, choisi dans la liste suivante :
- un polyester aliphatique
- un copolyester ayant des blocs aliphatiques et aromatiques
- un polyesteramide
- un polyester uréthane
- un polymère d'oxyde de polyéthylène ou un polyglycol,
et/ou des mélanges de ceux-ci.

4. Matériau polymère selon l'une des revendications 2 ou 3,
**caractérisé en ce que**
l'autre polymère est identique à l'agent plastifiant ou à l'agent gonflant.

5. Matériau polymère selon l'une quelconque des revendications 2 à 4,
**caractérisé en ce que**
comme polyesteramide et/ou comme au moins un autre polymère hydrophobe biologiquement dégradable, on met en oeuvre un polymère choisi dans l'énumération suivante :
- polyesters aliphatiques et partiellement aromatiques, choisis parmi :
A) des alcools bifonctionnels linéaires comme par exemple l'éthylèneglycol, l'hexanediol ou de préférence le butanediol, et/ou le cas échéant des alcools bifonctionnels cycloaliphatiques comme par exemple le cyclohexane diméthanol et en supplément éventuellement de petites quantités d'alcools de fonctionnalité plus élevée, comme par exemple le 1,2,3-propane-triol ou le néopentylglycol ainsi que des acides bifonctionnels linéaires, comme par exemple l'acide succinique ou l'acide adipique et/ou le cas échéant des acides bifonctionnels cycloaliphatiques comme par exemple l'acide cyclohexamedicarboxylique, et/ou le cas échéant des acides bifonctionnels aromatiques, comme par exemple l'acide téréphtalique ou isophtalique ou naphtalénedicarboxylique et en outre le cas échéant de faibles quantités d'acides à haute fonctionnalité, comme par exemple l'acide trimellitique ou
B) les éléments constitutifs fonctionnalisés par un acide et par un alcool par exemple l'acide hydroxybutyrique ou l'acide hydroxyvalerianique ou leurs dérivés, par exemple 1'ε-caprolactone
ou un mélange ou un copolymère à base de A et de B,
dans lequel les acides aromatiques ne représentent pas plus qu'une fraction de 50 % en poids rapporté à tous les acides,
- des polyesteruréthanes aliphatiques choisies parmi :
C) une fraction ester à base d'alcools bifonctionnels linéaires comme par exemple l'éthylèneglycol, le butanediol, l'héxanediol, de préférence le butanediol et/ou 1e cas échéant des alcools bifonctionnels cycloaliphatiques comme par exemple 1e cyclohéxanediméthanol et en supplément le cas échéant de petites quantités d'alcools de fonctionnalité plus élevée comme par exemple le 1, 2, 3-propanetriol ou le néopentylglycol ainsi que des acides bifonctionnels linéaires comme par exemple l'acide succinique ou l'acide adipique et/ou le cas échéant des acides bifonctionnels cycloaliphatiques, et/ou aromatiques comme par exemple l'acide cyclohexane dicarboxylique et l'acide théréphtalique et en supplément de petites quantités d'acide de fonctionnalité plus élevée comme par exemple l'acide trimellitique,
ou
D) une fraction ester à partir d'éléments constitutifs fonctionnalisés par un acide et par un alcool, par exemple l'acide hydroxybutyrique et l'acide hydroxyvalérianique ou leurs dérivés par exemple l'ε-caprolactone,
ou un mélange ou un copolymère à base de C) de D) et
E) le produit de réaction de C et/ou de D avec des isocianates aliphatiques et/ou cycloaliphatiques bifonctionnels et en supplément le cas échéant de fonctionnalité plus élevée par exemple le tétraméthylène diisocyanate, l'héxaméthylène diisocyanate, l'isophorone diisocyanate, le cas échéant en supplément avec des alcools linéaires et/ou cycloaliphatiques bifonctionnels et/ou de fonctionnalité plus élevée par exemple l'éthylène glycol, le butanediol, l'hexanediol, le néopentylglycol, le cyclohexane diméthanol,
- 1a fraction ester C et/ou D étant d'au moins 75 % en poids rapporté à la somme de C), D) et E),
- des polyester carbonates aliphatiques aromatiques à base d'
F) une fraction ester à base d'alcools bifonctionnels linéaires comme par exemple l'éthulèneglycol, le butanediol, l'hexanediol, de préférence le butanediol, et/ou les alcools bifonctionnels cycloaliphatiques comme par exemple le cyclohexane diméthanol et en supplément 1e cas échéant de petites quantités d'alcools de fonctionnalité plus élevée comme par exemple le 1, 2, 3-propanetriol, ou le néopentylglycol ainsi qu'à partir d'acides bifonctionnels linéaires comme par exemple l'acide succinique ou l'acide adipique et/ou le cas échéant des acides bifonctionnels cycloaliphatiques comme par exemple l'acide cyclohexane dicarboxylique et en supplément le cas échéant de petites quantités d'acides de fonctionnalité plus élevée comme par exemple l'acide trimellittique ou
G) une fraction ester à partir d'éléments constitutifs fonctionnalités par un acide et par un alcool, par exemple l'acide hydroxybutynique ou l'acide hydroxyvalérianique ou leurs dérivés par exemple 1'ε-caprolactone ou
un mélange ou copolymère à base de F) et de G) et
H) une fraction carbonate préparée à partir de phénols bifonctionnels aromatiques, de préférence le bisphénol A et les donneurs de carbonate par exemple le phosgène,
dans lequel la fraction ester F et/ou G s'élève à au moins 70 % en poids rapporté à la somme de F), G), et H) ;
- des polyesteramides aliphatiques à base d'
I) une fraction ester à partir d'alcools linéaires et/ou cycloaliphatiques bifonctionnels comme par exemple l'éthylèneglycol, l'hexanediol, le butanediol, de préférence le butanediol, le cyclohexanediméthanol, et en supplément le cas échéant de petites quantités d'alcools de fonctionnalité plus élevée par exemple le 1, 2, 3-propanetriol ou le néopentylglycol ainsi que des acides bifonctionnels linéaires et/ou cycloaliphatiques par exemple l'acide succinique ou l'acide adipique, l'acide cyclohexanedicarboxylique, de préférence l'acide adipique et en supplément le cas échéant de petites quantités d'acides de fonctionnalité plus élevée par exemple l'acide trimellitique ou
K) à partir d'une fraction d'ester choisie parmi les éléments constitutifs fonctionnalisés par un acide et par un alcool, comme par exemple l'acide hydroxybutyrique ou l'acide hydroxyvalérianique ou leurs dérivés par exemple la ε-caprolactone,
ou un mélange ou un copolymère à base de I et de K et
L) une fraction d'amide provenant d'amines linéaires et/ou cycloaliphatiques bifonctionnelles et en supplément éventuellement de faibles quantités d'amines à fonctionnalité plus élevée par exemple la tétraméthylènediamine, l'hexaméthylènediamine, l'isophoronediamine, ainsi qu'à partir d'acides linéaires et/ou cycloaliphatiques bifonctionnels, et en supplément éventuellement de faibles quantités d'acides de fonctionnalité plus élevée, par exemple l'acide succinique ou l'acide adipique ou
M) à partir d'une fraction d'amide à base d'éléments constitutifs fonctionnalisés par un acide et par une amine, de préférence le laurolactame et d'une manière particulièrement préférée l'e-caprolactame
ou un mélange à base de L et de M comme fraction amide dans lequel la fraction ester I et/ou K s'élève au moins à 30 % en poids rapporté à la somme de I, K, L et M.

6. Matériau polymère selon l'une quelconque des revendications 2 à 4,
**caractérisé en ce que**
comme autre polymère hydrophobe biologiquement dégradable on met en oeuvre un copolymère de polyester, accessible par polycondensation d'une part d'au moins un diol choisi dans 1a série du 1,2-éthanediol, du 1,3-propanediol, du 1,4-butanediol et/ou du 1,6-hexanediol avec d'autre part au moins un acide dicarboxylique aromatique et éventuellement au moins un acide dicarboxylique aliphatique.

7. Matériau polymère selon la revendication 6,
**caractérisé en ce que**
comme acide dicarboxylique on utilise de l'acide téréphtalique et comme acide dicarboxylique aliphatique de l'acide adipique et/ou de l'acide sébacique.

8. Matériau polymère selon l'une quelconque des revendications 2 à 7,
**caractérisé en ce que**
comme autre polymère hydrophobe biologiquement dégradable on met en oeuvre de l'acide polylactique, de l'acide polyhydroxybutyrique, de l'acide polyhydroxybenzoïque, un copolymère acide polyhydroxybutyrique, un acide hydroxyvalérianique ou la polycaprolactone.

9. Matériau polymère selon l'une quelconque des revendications 2 à 8,
**caractérisé en ce que**
comme autre polymère hydrophobe biologiquement dégradable, on utilise au moins un polymère de la liste suivante :
- des polyesteramides oligomères ayant un poids molaire à partir de 300, de préférence à partir de 1000, ainsi que des polyesteramides polymère à partir de 1000 mol/poids, de préférence au-dessus de 10.000 accessibles par synthèse :
des dialcools comme l'éthylèneglycol, le 1,4-butanediol, le 1,3-propanediol, le 1,6-hexanediol, le diéthylèneglycol entre autres et/ou des acides dicarboxyliques comme l'acide oxalique, l'acide succinique, l'acide adipique entre autres aussi sous forme de leurs esters respectifs (méthyle, éthyle, etc...) et/ou des acides hydroxycarboxyliques et des lactones comme la caprolactone entre autres, et/ou des aminoalcools comme l'éthanolamines, la propanolamine, etc.., et/ou des lactames cycliques comme l'ε-caprolactame ou le laurolactame etc.., et/ou les acides ω-aminocarboxyliques comme l'acide aminocaproïque etc..., et/ou des mélanges (1:1 sels) à base d'acides dicarboxyliques comme l'acide adipique, l'acide succinique, etc..., et de diamines comme l'hexaméthylène diamine, le diaminobutane etc...

10. Matériau polymère selon l'une quelconque des revendications 1 à 9,
**caractérisé en ce qu'**
au moins un autre composant comme un additif, une substance d'addition ou une substance de charge est incorporé l'un avec l'autre, comme un agent plastifiant, un agent stabilisant, un agent ignifuge, un autre biopolymère biologiquement dégradable, comme des esters de cellulose, la cellulose, l'acide polyhydroxybutyrique, une protéine hydrophobe, l'alcool polyvinylique, la gélatine, la zéine, un polysaccharide, un polylactide, l'acétate de polyvinyle, un polyacrylate, un alcool de sucre, la gomme laque, la caséine, un dérivé d'acide gras, des fibres végétales, de la lécithine ou du chitosane.

11. Matériau polymère selon l'une quelconque des revendications 1 à 10,
**caractérisé en ce qu'**
il contient en supplément du glycérol, du sorbitol, ou un autre agent plastifiant qui est ajouté lors de la production de l'amidon thermoplastique ou du matériau polymère biologiquement dégradable.

12. Procédé d'obtention d'un matériau polymère qui consiste en ou à base d'amidon thermoplastique,
**caractérisé en ce que**
l'amidon comme en particulier des amidons naturels ou des dérivés de ceux-ci sont rendus homogènes à l'état fondu avec un agent plastifiant ou un agent gonflant, en réduisant la teneur en eau avant ou lors du mélange à < 1 % en poids rapporté au poids du mélange, et en utilisant comme agent plastifiant ou agent de gonflement au moins un polyester amide.

13. Procédé selon la revendication 12, de préparation d'un matériau polymère qui consiste en ou à base d'amidon thermoplastique,
**caractérisé en ce que**
l'amidon comme en particulier l'amidon naturel ou des dérivés de celui-ci, est mélangé à l'état de fusion avec un autre polymère hydrophobe, biologiquement dégradable, comme en particulier avec un polymère en blocs, dans lequel 1e polymère hydrophobe réagit in situ avec l'amidon ou le dérivé de celui-ci, ce produit réactionnel sert à la formation d'un produit de fusion homogène, le cas échéant par addition d'un polymère supplémentaire biologiquement dégradable, ou d'un autre polymère biologiquement dégradable par voie hydrophobe comme intermédiaire de phases pour la formation d'un produit de fusion de polymère homogène.

14. Procédé selon l'une des revendications 12 ou 13,
**caractérisé en ce que**
la teneur en eau est réduite avant ou lors du mélange, à < 0,5 % en poids, de préférence à < 0,1 % en poids.

15. Procédé selon l'une quelconque des revendications 12 à 14,
**caractérisé en ce que**
le mélange à l'état de fusion s'effectue dans une zone de températures d'environ 120-260°C, de préférence dans une zone de 140 à 210°C.

16. Procédé selon l'une des revendications 12 à 15,
**caractérisé en ce que**
le mélange s'effectue dans une extrudeuse ou un malaxeur et, après décharge du produit de fusion en dehors de la buse, on refroidit celui-ci dans un bain d'eau et on le met en forme, afin d'être ensuite par exemple granulé.

17. Procédé de production de feuilles à bulles à base d'un matériau polymère selon l'une quelconque des revendications 1 à 11,
**caractérisé en ce que**
le matériau polymère qui se présente sous forme de granulé est mis en forme avant le façonnage par soufflage avec un agent plastifiant comme le glycérol, le sorbitol etc... et/ou l'eau.

18. Procédé selon la revendication 17,
**caractérisé en ce que**
le matériau polymère qui se présente sous forme de granulé est mis en forme jusqu'à une teneur en eau de 1 à 6 % en poids et ensuite est soufflé en feuilles, dans lequel les feuilles produites sont stockées de préférence encore directement après la production dans un environnement relativement humide, avec une humidité relative > 40 %.

19. Procédé de façonnage d'un matériau polymère selon l'une quelconque des revendications 1 à 11,
**caractérisé en ce que**
pour l'injection ou l'extrusion du matériau qui se présente sous forme de granulé, la teneur en eau est réduite à au maximum 1 % en poids, de préférence à 0,4 % en poids.

20. Feuilles à une ou plusieurs couches, contenant au moins une couche, qui consiste en un matériau polymère selon l'une quelconque des revendications 1 à 11.

21. Feuilles d'emballage flexible contenant au moins une feuille d'assemblage enduite, que l'on peut obtenir par calandrage à température accrue contenant au moins du papier et une couche à base d'un matériau polymères selon l'une quelconque des revendications 1 à 11.

22. Conteneur ou flacons produit à l'aide de soufflage de moule, consistant essentiellement en un matériau polymère selon l'une quelconque des revendications 1 à 11.

23. Produit textile te1 que fibres, monofils, toiles, cordes, produits en lin, flocons, ouates, tissus, feutres, non-tissés, consistant essentiellement en un matériau polymère selon l'une quelconque des revendications 1 à 11.

24. Matériau de filtre consistant essentiellement en un matériau polymère, selon l'une quelconque des revendications 1 à 11 ou un produit textile selon la revendication 23, dans lequel le matériau de filtre se présente sous forme de filtre pour cigarette.

25. Article d'hygiène comme des couches, bandage, produits pour incontinence, protecteurs pour lits et similaires, possédant au moins un non-tissé et/ou une feuille arrière consistant essentiellement en un matériau polymère selon l'une quelconque des revendications 1 à 11.

26. Adhésif consistant essentiellement en un matériau polymère selon l'une quelconque des revendications 1 à 11 ou en une solution alcoolique de celui-ci.

27. Revêtement, comme en particulier un agent d'imprégnation, consistant essentiellement en un matériau polymère selon l'une des revendications 1 à 11, ou une solution alcoolique de celui-ci.

28. Munitions de manoeuvre ou d'exercice consistant essentiellement en un matériau polymère selon l'une quelconque des revendications 1 à 11.

29. Aides de traversée ou chemins repliables aussi bien dans le domaine militaire que dans le domaine civil, pour rendre praticable des zones qui ne sont pas dotées de voies de communication, consistant essentiellement en un matériau polymère selon l'une quelconque des revendications 1 à 11.

30. Procédé de production d'une feuille plane ou à bulles à une ou à plusieurs couches parmi lesquelles au moins une couche consiste en un mélange polymère selon l'une quelconque des revendications 1 à 11, en particulier produit conformément à un procédé selon l'une quelconque des revendications 13 à 17, dans lequel la plastification des matières premières et la production consécutive de feuilles, s'effectuent en continu et en une seule étape.
